# EUROPEAN PATENT SPECIFICATION

(11) **EP 2 051 182 B1**
(45) Date of publication and mention of the grant of the patent: **23.07.2014**
(21) Application number: 06782436.7
(22) Date of filing: 07.08.2006
(51) Int. Cl.: G06F 21/62

(54) **DATA TRANSFER DEVICE**
DATENTRANSFEREINRICHTUNG
DISPOSITIF DE TRANSFERT DE DONNÉES

(43) Date of publication of application: 22.04.2009
(73) Proprietor: Mitsubishi Electric Corporation, Chiyoda-ku Tokyo 100-8310 (JP)
(72) Inventor: YAGIU, Riko, Tokyo 100-8310 (JP)
(74) Representative: Pfenning, Meinig & Partner GbR
(86) International application number: PCT/JP2006/315594
(87) International publication number: WO 2008/018115

(56) References cited:
- JP-A- 2003 078 636
- US-A- 6 125 326

## Description

### Technical Field

The present invention relates to a data transfer apparatus that allows data stored therein to be transferred to a separate device.

### Background Art

In-vehicle devices mounted on automobiles usually perform navigation with reference to registration information (such as the position of user's own house, the position of destination, and the like), or information unique to each in-vehicle device acquired from the Global Positioning System (GPS). These types of information are used for learning routes and so forth, and therefore usually stored in in-vehicle devices.

These types of information may relate to privacy or corporate security, and in-vehicle devices may face a risk of being stolen, and the like. This may pose a problem of ensuring security. There has been however no device that is capable of automatically protecting information to be protected stored therein by saving such information in a more secure storage, capable of checking the state of a device from a mobile phone and the like, by a user via voice instruction or the like.
Patent Document 1: JP 2004-361116 A

US 6,125,326 A describes a combination of a main navigation apparatus which is fixed to a vehicle and a sub-navigation apparatus which is detachable from the vehicle. When the sub-navigation apparatus is attached, map information and current position information is displayed on a main display, and state of the vehicle is displayed on a sub-display. When detaching the sub-navigation apparatus from the vehicle, area map information necessary for waking outside of the vehicle is transmitted from an on-vehicle database to a RAM in the sub-navigation apparatus.

JP 2003 078636 A describes a mobile telephone that, when turning off the power supply of the mobile telephone, performs an automatic backup of personal information data to an external database.

### Disclosure of the Invention

### Problems to be Solved by the Invention

Normally, it is desirable that information securely managed outside a vehicle is inputted to an in-vehicle device in the vehicle. The following problems, however, hinder the normal procedure.
(1) There is no means in the in-vehicle device of automatically discriminating privacy information to determine protected objects.
(2) There is no method of automatically protecting information in a secure place without an operation by a user. For example, information can be stored in a memory such as an SD Card (Registered Trademark) or the like at the end of an operation. However, the SD card may be lost if one forgets to remove it from the machine, etc.

The present invention is to provide an apparatus that may automatically extract data to be protected, and then automatically save extracted data in a secure device.

### Means to Solve the Problems

The Problems are solved by a data transfer apparatus according to claim 1. The dependent claims provide advantageous embodiments of the data transfer apparatus according to claim 1.

### Effect of the Invention

This invention may allow a data item that one wishes to protect to be automatically extracted from data items stored in a device, and then automatically transferred to a different device.

### Best Mode for Carrying out the Invention

### Embodiment 1.

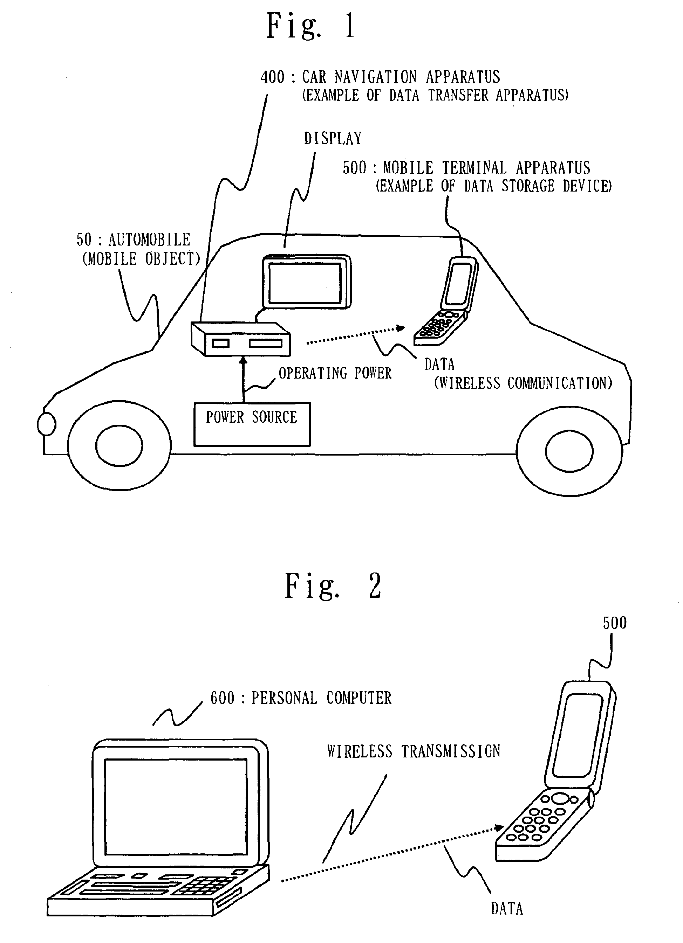

A first embodiment is described with reference to Fig. 1 to Fig. 10. According to the first embodiment, a data transfer apparatus transfers data stored therein to a data storage device by wire or wireless, when detecting a power OFF event indicating a cutting off of operating power for the data transfer apparatus. The data transfer apparatus of the first embodiment may allow data that one does not want any else to steal to be automatically transferred to a different device without requiring manual operations.

In the following description of this embodiment, the words and phrases of "data to be protected" or "protected data" indicates data that is always to be transferred, and "data to be transferred", or transferred data, indicates data that is to be transferred. More specifically, if data is composed of two or more component data items, and at least one component data item is the data to be protected, then the data is the data to be transferred. It is the user to define which data items are to be protected and transferred, as described later. By this definition, the data to be transferred may be automatically extracted.

Fig. 1 shows an example how a data transfer apparatus, as a computer, is used. Fig. 1 illustrates a case where the data transfer apparatus is implemented as a car navigation apparatus 400. The car navigation apparatus 400 (a data transfer apparatus), when detecting a power OFF event indicating a cutting off of operating power for its own operation, may transfer "predetermined data" stored therein to a mobile terminal apparatus 500 (an example of a data storage device). In a normal mode, the car navigation apparatus 400, having transferred a predetermined data item, may delete identical data to the data that has been transferred, from the data stored therein. Data however needs not necessarily be deleted, if the data needs to be transferred but it does not matter whether the data is stolen. Here, it is assumed that the mobile terminal apparatus 500 is a mobile phone, an electronic diary, a Personal Digital Assistant (PDS: Registered Trademark), or the like. Data may be transferred in radio communication by using Blue Tooth (Registered Trademark), for example.

Fig. 2 shows another example how a data transfer apparatus, as a computer, is used. Fig. 2 illustrates a case where the data transfer apparatus is implemented as a personal computer 600. The personal computer 600 (a data transfer apparatus), when detecting a power OFF event indicating a cutting off of operating power for its own operation, may transfer "predetermined data" stored therein to the mobile terminal apparatus 500 (a data storage device). The personal computer 600, like the car navigation apparatus 400, having transferred a predetermined data item, may delete an identical data item to the data that has been transferred, from data items stored therein, in a normal mode.

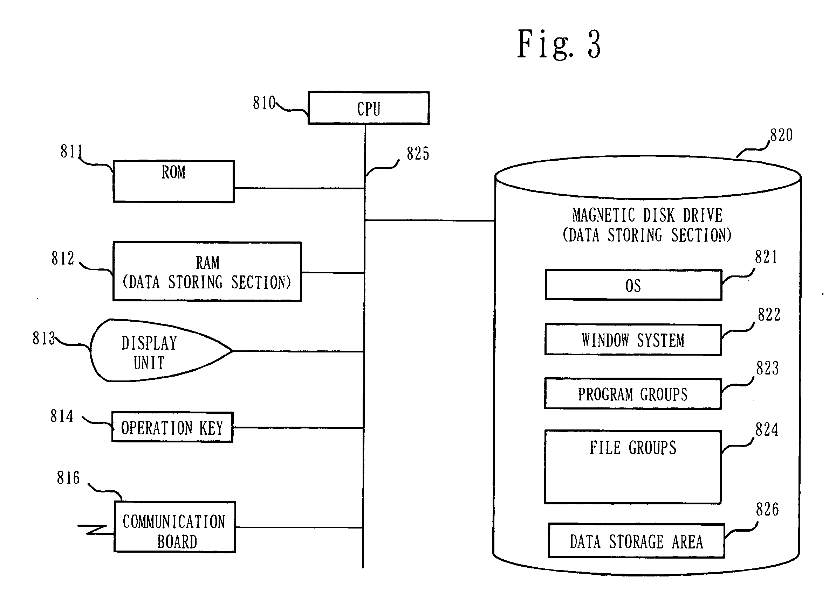

Fig. 3 shows an example of a hardware resource of a data transfer apparatus as a computer to be implemented as the car navigation apparatus 400 or the personal computer 600. It should be noted that the mobile terminal apparatus 500 is also a computer, and the hardware resource of the mobile terminal apparatus 500 is the same as those of the data transfer apparatus.

Referring to Fig. 3, the data transfer apparatus may be equipped with a Central Processing Unit (CPU) 810 to run programs. The CPU 810 may be connected to a Read Only Memory (ROM) 811, a Random Access Memory (RAM) 812, a display unit 813, an operation key 814, a communication board 816, and a magnetic disk drive 820 via a bus 825, and control these hardware devices. The magnetic disk drive 820 may be replaced by a storage device such as an optical disk drive, a memory card read/write device, or the like.

The RAM 812 is an example of a volatile memory. The storage media such as the ROM 811, the magnetic disk drive 820, etc. are examples of nonvolatile memories. These devices are examples of storage devices, storage units, storage sections, or the like.

The communication board 816, the operation key 814, etc. are examples of inputting sections, inputting devices, or the like. The communication board 816, the display unit 813, etc. are examples of output sections, output devices, or the like.

The communication board 816 may transfer data to the data storage device of the mobile terminal apparatus 500, etc. by wire or wireless. The communication board 816 may also receive data from other devices by wire or wireless.

The magnetic disk drive 820 may store an operating system (OS) 821, a window system 822, program groups 823, and file groups 824. Programs in the program group 823 may be executed by the CPU 810, the operating system 821, and the window system 822. The magnetic disk drive 820 may include a data storage area 826 in which data to be transferred is stored.

The program group 823 may store programs to execute functions, each of which is referred to as a "section" in the descriptions of the following embodiments. The programs may be read and run by the CPU 810.

The file group 824 may store information, data, signal values, variable values, parameters, and the like, as items of "files" or "databases". The information may be explained as a "determination result", a "calculation result", an "extraction result", a "generation result" or a "processing result" in the descriptions of the following embodiments. The file group 824 may store protected data definition information 1040 and an additional information list 1050 described later.

The "files" and "databases may be stored in a storage medium such as a disk or a memory.

Information, data, signal values, variable values and parameters stored in a storage medium such as a disk or a memory may be read by the CPU 810 out in a main memory or a cache memory, via a read/write circuit, and used in CPU operations of extraction, searching, reference, comparison, computation, calculation, processing, outputting, displaying, and the like.

During operations performed by the CPU for extraction, searching, reference, comparison, computation, calculation, processing, outputting or displaying, information, data, signal values, variable values or parameters may be temporarily stored in a main memory, a cache memory or a buffer memory.

Also in the descriptions of the following embodiments, data and signal values may be stored in a storage medium, such as a memory in the RAM 812, a magnetic disk in the magnetic disk drive 820, an optical disk, a mini disk, a Digital Versatile Disk (DVD), or the like. Data and signals may be transmitted online through the bus 825, a signal line, a cable or any other transmission medium.

It is to be noted that an element referred to as a "section" in the descriptions of the following embodiments may be a "circuit", a "unit", a "device" or a "means". They may alternatively be a "step"; a "procedure" or a "process". More specifically, an element referred to as a "section" may be implemented by firmware stored in the ROM 811. The element may alternatively be implemented by software alone, hardware alone such as an element, a device, a substrate, wiring or the like. The element may alternatively be implemented by a combination of software and hardware, or a combination of software, hardware and firmware. Firmware and software may be stored as programs in a storage medium such as a magnetic disk, an optical disk, a compact disk, a minidisk, a DVD or the like. Programs may be read and run by the CPU 810. That is, a program causes a computer to function as a "section" described hereinafter. A program may alternatively cause a computer to carry out the procedure or method of a "section" described below.

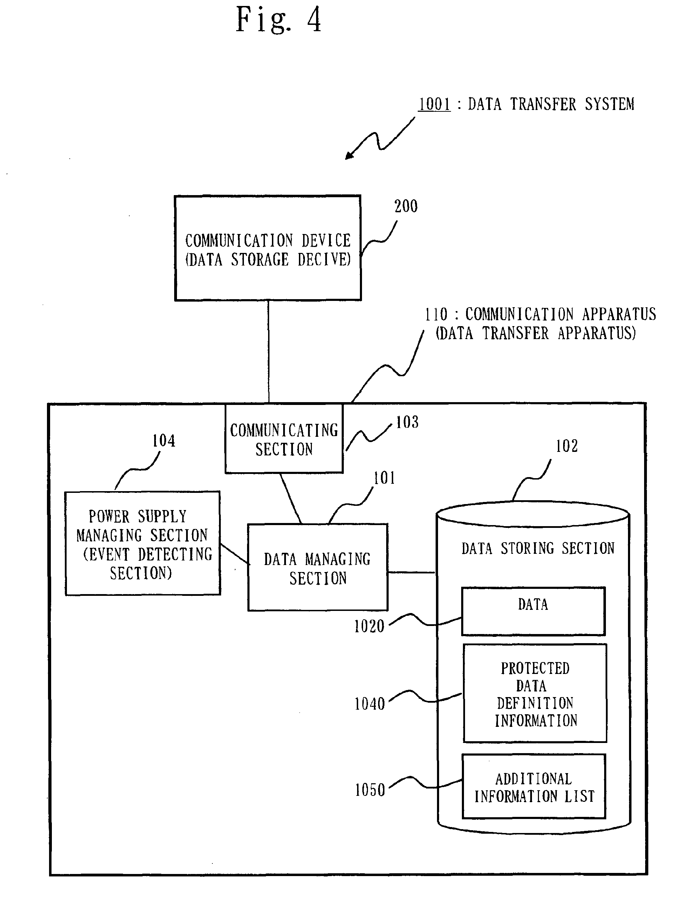

Fig. 4 shows a system configuration of a data transfer system 1001 according to the first embodiment. The data transfer system 1001 may include a communication apparatus 110 and a communication device 200.
(1) The communication apparatus 110 is a data transfer apparatus. As described earlier, the communication apparatus 110 may be a car navigation apparatus or a personal computer, which however the communication apparatus 110 is not limited to.
(2) The communication device 200 is a data storage device that may store data transferred from the communication apparatus 110. The communication device 200 may be a mobile terminal apparatus as described above. The communication device 200 may be registered as a communication destination in advance in the communication apparatus 110. The communication apparatus 110 may communicate with the communication device 200 via a communicating section 103.

The communication apparatus 110 may include a data managing section 101, a data storing section 102, the communicating section 103 and a power supply managing section 104.
(1) The data storing section 102 may store data 1020 that can be handled by the communication apparatus 110, the protected data definition information 1040 and the additional information list 1050, and the like.
(2) The communicating section 103 may communicate with the communication device 200.
(3) The power supply managing section 104 (an example of an event detecting section) may manage the state of power supply for the communication apparatus 100 to operate. The power supply managing section 104 may detect the "power OFF event" indicating a cutting off of operating power for the communication apparatus 110 to which the power supply managing section 104 belongs.
(4) The data managing section 101 may extract a data item to be transferred, from the data 1020 stored in the data storing section 102 on a predetermined timing. The data managing section 101 may determine whether or not to save the data item, according to a detection result about the state of power supply by the power supply managing section 104. The data managing section 101 may also determine whether or not to delete a data item that has been saved. When it is determined that the data item is to be saved and the data item that has been saved is to be deleted, then the data managing section 101 may save data in the communication device 200 via the communicating section 1003. The data managing section 101, after confirmation that the data saving operation is completed, may delete the data item that has been saved in the data storing section 102.

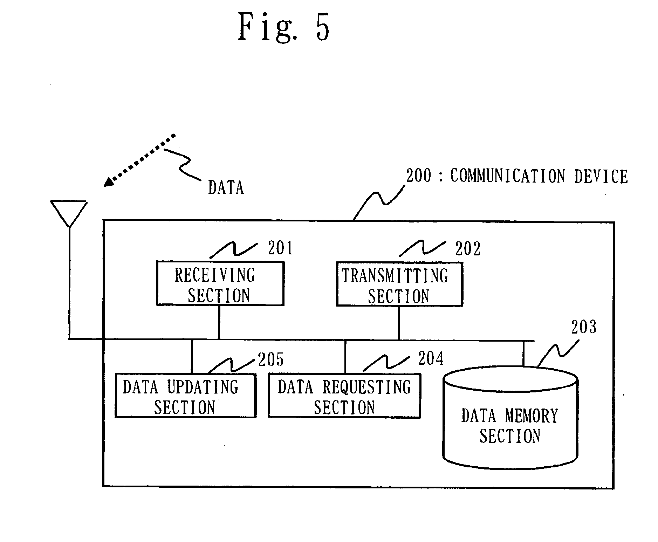

Fig. 5 shows a block diagram of the data communication device 200 (a data storage device). As mentioned earlier, the communication device 200 is a mobile phone, for example, but some of the elements of the communication device 200 relevant to the first embodiment are referred to here as a "section" each.

The communication device 200 may include a receiving section 201, a transmitting section 202, a data memory section 203, a data requesting section 204 and a data updating section 205.
(1) The receiving section 201 may receive data transferred by the communication apparatus 110.
(2) The transmitting section 202 may transmit response information described later, and the like.
(3) The data memory section 203 may store data received by the receiving section 201.
(4) The data requesting section 204 may generate the response information described later upon receipt of a predetermined operation from a user, when the receiving section 201 receives prior notice information described later from the communication apparatus 110, and then transmit the response information generated to the communication apparatus 110 via the transmitting section 202. This operation will be described with reference to a sixth embodiment.
(5) The data updating section 205 may update data stored in the data memory section 203 based on data received by the receiving section 201. This operation will be described later in this embodiment.

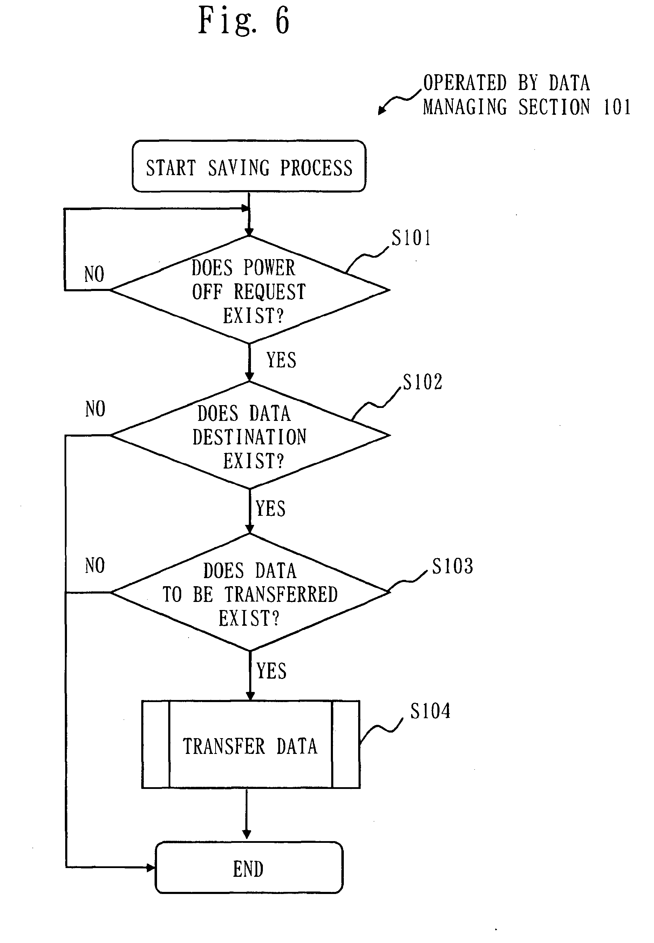

A data saving operation performed by the data managing section 101 is described with reference to Fig. 6. Fig. 6 shows a series of operations for saving data by the data managing section 101.

### (S101: Determination on whether or not a power OFF request exists)

In a determining step S101, the data managing section 101 determines whether or not a power OFF request event exists, by using the power supply managing section 104. The data managing section 101, when determining that a power OFF request does not exist at step S101 (NO at S101), regularly confirms whether or not the power supply managing section 104 has detected the power OFF request event, while performing a standby operation not shown in the figure. The data managing section 101, when determining that the power OFF request event is detected at the determining step S101 (YES at S101), determines whether or not a data transfer destination exists in a next determining step S102.

### (S102: Determination on whether or not a data transfer destination exists)

In a step S102, the data managing section 101 determines whether or not a device previously specified as a data transfer destination (here, the communication device 200 of Fig. 4) is available for communication. The data managing section 101 may make a determination result of this case by using the communicating section 103. This determination process S102 on whether or not a data transfer destination exists may be performed by: previously or regularly exchanging Ping, or other commands of exchanging status information of devices, between the communication apparatus 110 and the communication device 200; storing the status information in a memory not shown in the figures, or the like; and regularly updating and using the status information. In the determining step S102, when the data managing section 101 determines that a data transfer destination exists (YES at S102), then the process proceeds to a determining step S103. When the data managing section 101 determines that a data transfer destination does not exist at the determining step S102 (No at the determining step S102), then the process terminates.

### (S103: Determination on whether or not data to be transferred exists)

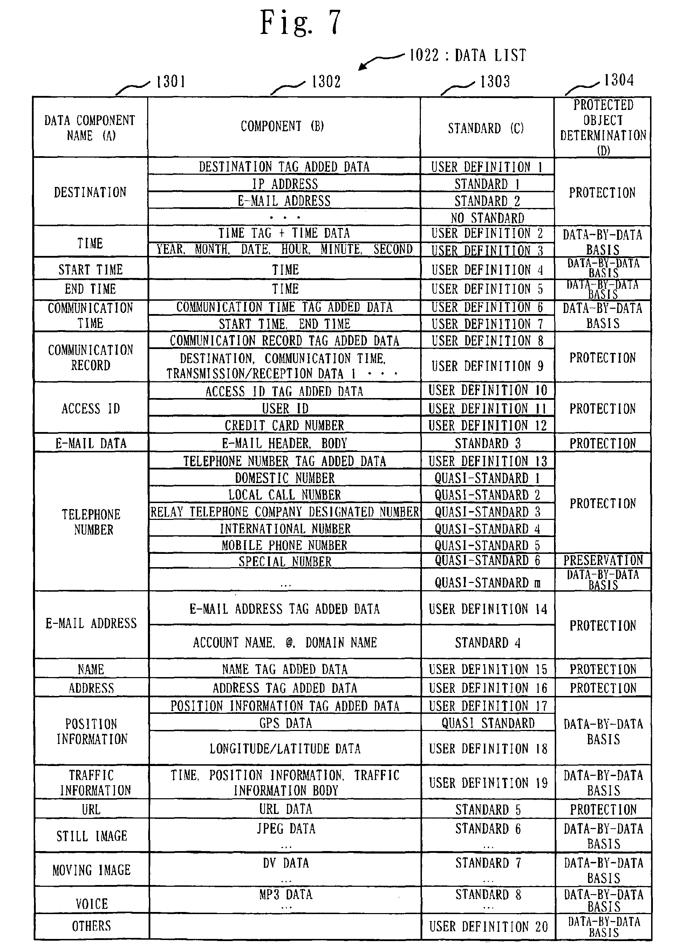

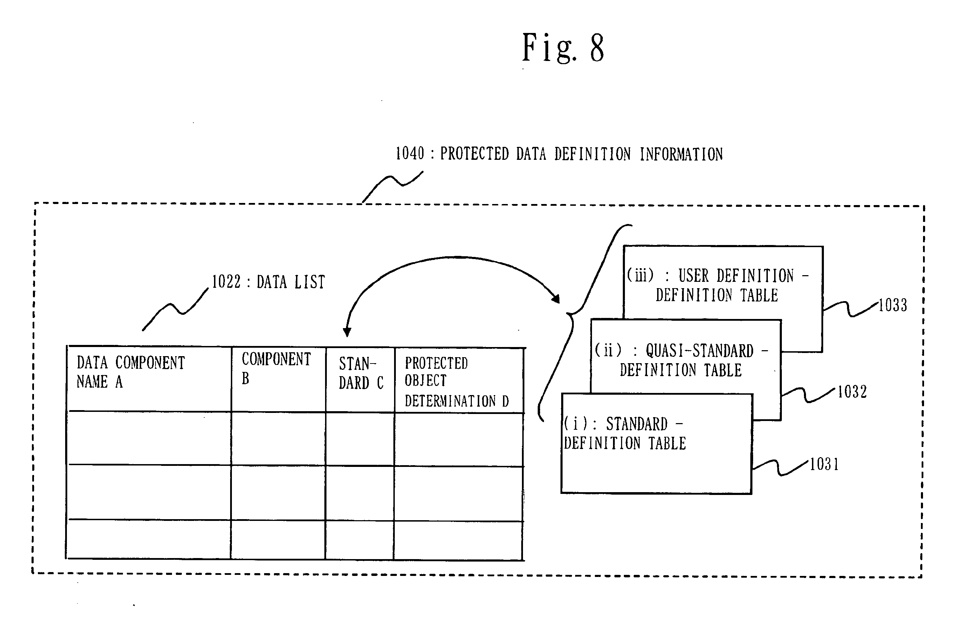

The data managing section 101 determines whether or not data to be transferred exists at the determining step S103. Data to be transferred is transferred to the communication device 200 in a data transfer process S104. The step S103 will be described later in more detail with reference to Fig. 7 and Fig. 8.

### (S104: Data transfer process)

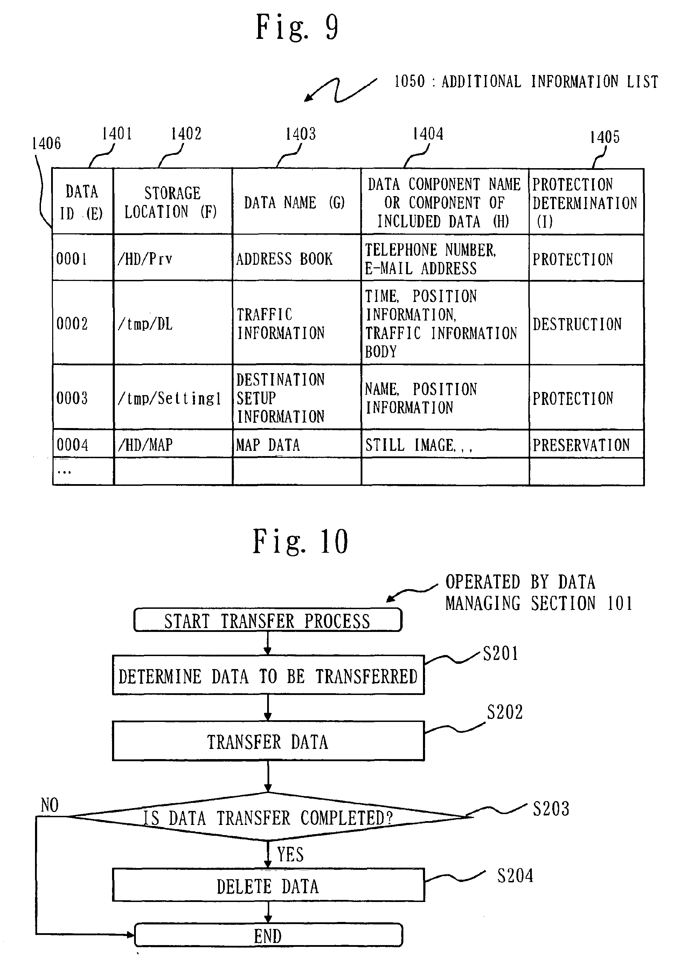

When determining that data to be transferred exits at S103, then the data managing section 101 performs a data transfer operation at S104. The step S104 will be described later in more detail with reference to Fig. 9, following a detailed description of S103. When the data transfer operation is completed, the data saving process terminates.

### (Details of the determination process S103 on whether or not data to be transferred exists)

The process of "determination on whether or not data to be transferred exists (S103)" of Fig. 6 is now described in detail with reference to Fig. 7 and Fig. 8. The data managing section 101 of the communication apparatus 110 determines whether or not data to be transferred exists at S103 of Fig. 6. First, a description is given of the outline of a determination on whether or not data to be transferred exists, performed by the data managing section 101.

### (Outline of determination on whether or not data to be transferred exists)

(1) Fig. 7 (described later in more detail) shows a data list 1022 of data that can be handled by the communication apparatus 110. In Fig. 7, a column 1304 lists protected object determination (D), indicating whether or not a data item, "destination", is to be protected. If a data item is a "protected object", or to be protected, the data item is to be transferred.
(2) In the example of Fig. 7, the "destination" corresponds to "protection" of the column 1304. Therefore, if there is a data item "destination" in the data 1020 stored in the data storing section 102, the data managing section 101 determines that the "destination" stored in the data storing section 102 is to be protected. Thus, the data list 1022 of Fig. 7 is predefined information for determining whether or not data items stored in the data storing section 102 are to be protected and transferred. As shown in Fig. 8, described later, the protected data definition information 1040 may include the data list 1022 and various types of definition tables. The data list 1022 is stored in the data storing section 102 as part of the protected data definition information 1040. The data list 1022 is generated by human operation, and stored in the data storing section 102.
(3) The data managing section 101 may automatically extract a data item to be transferred from the data 1020 stored in the data storing section 102 based on the data list 1022 stored in the data storing section 102, and then automatically transfer the extracted data item to the communication device 200. Extraction timing may be set in advance. The data managing section 101 may extract a data item to be protected on the preset timing.

The extraction timing may be preset by a period when some data is received from a separate device, or when some data is generated inside the communication apparatus 110. The data managing section 101 determines, upon detection of the power OFF event (YES at S101), whether or not the extracted data item to be transferred exists (S103), if the transfer destination of data exists (YES at S102). If the extracted data item to be transferred exists (YES at S103), then the data managing section 101 transfers the extracted data item to be transferred to the previously specified communication device 200 (S104).

The data list 1022 of Fig. 7 is now described in more detail. Fig. 7 shows the list of data items that the communication apparatus 110 can handle. The "data items that the communication apparatus 110 can handle" here indicates "data component (A)" at a column 1301 and "component (B)" at a column 1302.

Referring to the data list 1022,
(a): the column 1301 lists the "data component names (A)" of components of some data, and
(b): the column 1302 lists the "components (B)" of the "data component names (A)". The "data component name (A)" may include a variety of types of components. For example, in the case of "telephone number" of the "data component name (A)", there are various types of telephone numbers, such as domestic numbers, mobile phone numbers, special numbers (of police, fire department, etc.).
The "component (B)" in the column 1302 may be:
(b-1): "data component name (A)",
(b-2): primitive data, or
(b-3): a list of these types of data.

The case where the "component (B)" is the "data component name (A)" (b-1) may be described as follows: Fig. 7, a "destination" exists as the "component (B)" corresponding to a "communication record" as the "data component name (A)", for example. On the other hand, a "destination" also exists as the "data component name (A)" (fist line).

The case where the "components (B)" is "primitive data" (b-2) may be described as follows: There is no component of the "component (B)", and therefore, the definition of the "component (B)" uniquely determines the "component (B)".

The definition form of this primitive data may be one of:
(1) a user definition (a definition that prescribed by one of applications used in the communication apparatus 110, and that does not conform to generally applicable standards),
(2) a standard (that conforms to some standard), or
(3) a quasi-standard (an applicable standard to some extent, such as a telephone number, or the like).

The "list of these types of data" (b-3) indicates the case where the "component (B)" of one data item is made up of the "data component name (A)" and "component (B)" of another data item. More specifically, (b-3) may be described as follows: In the case of the "communication record" as the "data component name (A)", for example, the corresponding "component (B)" includes "destination, communication time, transmission/reception data, ....". In this case, the "destination, communication time, transmission/reception data, ...." is the "list". The "destination" and the "communication time" among the "destination, communication time, transmission/reception data, ...." are also listed as the "data component names (A)". The "transmission/reception data" only exists as the "component (B)". Thus, the list of the "destination, communication time, transmission/reception data, ...." is made up of the "data component name (A)" and the "component (B)".

(c): a column 1303 lists "standard (C)". The "standard (C)" indicates which of the user definition (1), the standard (2) and the quasi-standard (3) determines the "component (B)".

(d): the column 1304 lists the "protected object determination D". The "protected object determination D" indicates whether or not the "component (B)" is to be protected. A "protection" as the "protected object determination D" indicates that the "component (B)" is to be protected. In the case of "data-by-data basis" as the "protected object determination D", the data managing section 101 determines whether or not data is to be protected on a data-by-data basis. More specifically, the data managing section 101 determines as follows: In the case of "data-by-data basis" as the "protected object determination D" of the column 1304, the "data component name (A)" and the "component (B)" are not protected by themselves or protected objects (individual non-protection). For example, the "communication time" as the "data component name (A)" corresponds to "data-by-data basis", and therefore the "communication time" itself is not to be protected or a protected object. On the other hand, the "component (B)" forms the list. When the list of "component (B)" includes the "data component name (A)" or the "component (B)" corresponding to "data-by-data basis", and if the list of "component (B)" includes at least one of the "data component name (A)" and "component (B)" corresponding to "protection", the data managing section 101 determines that this "list" is to be protected. The communication time in the "destination, communication time, transmission/reception data, ...." as the "component" corresponding to the "communication record" as the "data component name (A)" is also found as the "data component name (A)" corresponding to "data-by-data basis". The "destination" in the "destination, communication time, transmission/reception data, ...." is also found as the "data component name (A)" corresponding to "protection". Therefore, it is determined that the "destination, communication time, transmission/reception data, ...." as the "component" corresponding to the "communication record" as the "data component name (A)" is to be protected. "Preservation" is another item as the "protected object determination D". The "preservation" indicates that a corresponding data item is to be stored in a nonvolatile memory at the end of an operation of the communication apparatus 110 (when the power is turned OFF, or the like). "Destruction" is another item of the "protected object determination D". The "destruction" indicates that data is to be deleted by the end of an operation of the communication apparatus 110 (when the power is turned OFF, or the like).

With further reference to the data list of Fig. 7, it is also possible to assign "preservation" or "destruction" only to the case of a specific form owned by the component (B) of a specific type (the data component (A) included in the component (B) of one item of data or the component (B) of another item of data).

It is possible to automatically determine whether a data item (component (B)) corresponds to "(1): standard" or "(2): quasi-standard" based on the form of the data item (component (B)) or a part of a form included in the data item (component (B)). For example, an e-mail address has the form of "account name, @, domain name". Therefore, the data managing section 101 may determine data including the form of "account name, @, domain name" as an e-mail address, with reference to a "definition table" described later.

The forms of telephone numbers are generally fixed, although the length varies, such as:
Domestic numbers: (0, area codes, local codes, subscriber numbers) Special numbers: (numbers for important occasions and situations from urgency, public interest, and safety and security, and for supplementary services, such as 1** assigned to police services, fire-fighting service, etc.) Therefore, the data managing section 101 may determine that these data items are telephone numbers, with reference to the "definition table" described later. As for the "user definition", the data managing section 101 may obviously identify the data item (component (B)) corresponding to the "user definition", with reference to the "definition table" described later.

Fig. 8 shows the protected data definition information 1040 that defines data to be protected. As shown in Fig. 8, the protected data definition information 1040 is made up of the data list 1022 shown in Fig. 7 and the definition table described later.
(1) A standard-definition table 1031 is a table to define a data item (component (B)) determined by a standard. For example, an "IP address" as "component (B)" corresponding to the "destination" as the "data component name (A)" in Fig. 7 is a "standard". Therefore, the data managing section 101 may identify the "IP address" among other data items, with reference to the standard-definition table 1031.
(2) A quasi-standard-definition table 1032 is a table to define the component (B) determined by a quasi-standard. For example, a "domestic number" as the "component (B)" corresponding to the "telephone number" as the "data component name (A)" of Fig. 7 is a "quasi-standard". Therefore, the data managing section 101 may identify the "domestic number" among other data items, with reference to the quasi-standard-definition table 1032.
(3) A user definition-definition table 1033 is a table to define the component (B) by a user definition. For example, "destination tag added data" as the "component (B)" corresponding to the "destination" as the "data component name (A)" of Fig. 7 is a "user definition". Therefore, the data managing section 101 may identify the "destination tag added data" among other data items, with reference to the user definition-definition table 1033.

### (Generation of additional information list)

Fig. 9 shows the additional information list 1050. The data managing section 101 generates the additional information list 1050 about data items that are currently stored in the data storing section 102 and that are to be transferred, with reference to the protected data definition information 1040. The data managing section 101 determines whether or not a data item to be transferred exists in the determining step S103, with reference to the generated additional information list 1050.

The data managing section 101 generates the additional information list 1050 on a preset timing, and stores the list in the data storing section 102.

The additional information list 1050 of Fig. 9 is now described below. Data (to be transferred) in the data storing section 102 is stored together with the additional information list 1050 such as that shown in Fig. 9.
(1) A column 1041 lists data ID (E). The data ID (E) specifies each data item (or possibly an individual data group of divided files).
(2) A column 1042 lists storage location (F). A storage location (F) indicates a location in which a data item identified by a data name (G) is stored.
(3) A column 1043 lists data name (G). The data name (G) indicates a data item identified by the data name (G). The whole items of data identified by the data names (G) are the transferred data to be transferred to the communication device 200. Among data items identified by the data names (G), data items assigned "protection" by protection determination (I) are to be transferred. In the case of Fig. 9, an "address book" and "destination setup information" are "data to be transferred".
(4) A column 1404 lists "data component name or component (H)", which indicates the data component name (A) or component (B) included in a data item listed as the data name (G).
(5) A column 1405 lists the results of protection determination (I). The protection determination (I) has information on data protection. The protection determination (I) is performed by the data managing section 101 based on the value of the "protected object determination (D)" of Fig. 7.

Further reference is made to the columns 1401 to 1405.
(1) The Data ID (E) is determined by the data managing section 101 so that it is unique within the communication apparatus 110, when data is received (acquired from outside by wire or wireless), or generated (automatically generated, calculated, or processed by an application).
(2) The storage location information (F) is determined by the data managing section 101 for each application at the time when a data item indicated by the data name (G) is generated, or for each input route of information.
(3) The "data component name or component of included data (H)" is a list of data (at least one of the data component name (A) and the component (B)) that can be handled in the communication apparatus 110 shown in Fig. 7.
(4) The protection determination (I) may be on of the following values:
   (4-1) protection (data to be protected that is transferred from the communication apparatus 110 to the communication device 200, and protected there);
   (4-2) destruction (data to be deleted at least by the end of the operation of the communication apparatus 110); and
   (4-3) preservation (data to be preserved).
These values are determined by the data managing section 101 based on the protected object determination information (D) corresponding to the "data component name or component of included data (H)" in the column 1404 as described earlier.

### (Data storage)

A data storing operation is now described. For example, the "address book" in a row 1406 indicates data that has been transferred by wireless to the communication apparatus 110 from a mobile phone. In this example, the data managing section 101 assigns 0001 to the "address book" as the data ID (E), upon receipt of the "address book". The data managing section 101 then assigns the data name, "address book", to an "/HD/Prv directory" of the hard disk, and stores the data name.

### (Additional information list generation)

In such case, the data managing section 101 refers to the content of the data received from the mobile phone (the address book), and then checks data list 1022 against the standard-definition table 1031 to the user definition-definition table 1033, as shown in Fig. 8. The data managing section 101 then generates a list of the data component names (A) and/or components (B) of Fig. 7 about the "address book". This list is the "data component or component of included data (H)" at the column 1404. The row 1406 of Fig. 9 shows a case where the data managing section 101 generates the list of "telephone number, e-mail address, .... " With this list, when there is at least one data item to be protected, the data managing section 101 determines that the data item is to be protected, and then stores "protection" as an item of the protection determination (I) in the column 1405. In the example of Fig. 9, the "e-mail address" in the "telephone number, e-mail address, ..." is assigned "protection", as shown in the component (B) of the data component name (A) of Fig. 7. Therefore, the data managing section 101 assigns "protection" as an item of the protection determination (I) for the "telephone number, e-mail address, ...".

### (Protection indication information added data)

In the above situation, it may also be possible to add the notification of protection indication information on whether or not data is to be protected, to a transmission/reception application (or protocol) to be used for transferring data to the communication apparatus 110 from a mobile telephone. This may be implemented by allowing "address book data" in Fig. 7, for example, to be handled, and converting the component (B) of the "address book data" into a format of protection indication information added data, which may be written in an extended Markup Language (XML) or the like. For example, the communicating section 103 may receive protection indication information added data from a mobile phone (an information transmitting device) that transmits protection indication information added data with protection indication information added. The data storing section 102 may store the protection indication information added data received at the communicating section 103. The data managing section 101 may transfer the protection indication information added data stored in the data storing section 102 via the communicating section 103 when the power supply managing section 104 detects the power OFF event. Obviously, this may be implemented also in a second embodiment.

It is also possible to determine the item of protection determination (I) at the column 1405, "protection", "destruction", or "preservation", by the data managing section 101 for each data received or for each application generating data.

In the determining step S103 to determine whether or not data to be transferred exists, the data managing section 101 determines whether or not data to be transferred exists based on the value of the protection determination (I) of Fig. 9. More specifically, the data managing section 101 determines that data to be transferred exists when there is a "protection" as the protection determination (I). When a "protection" does not exist as the protection determination (I), the data managing section 101 determines that data to be transferred does not exist. When the data managing section 101 determines that data to be transferred exists (YES at S103), then the process proceeds to the data transfer step S104 where the data managing section 101 performs the data transfer process.

That is a detailed description of S103.

### (Details of the data transferring process S104)

The data transferring step S104 is now described with reference to Fig. 10. The data managing section 101, when starting the process, determines a data item to be transferred in a step S201. For example, the data managing section 101 extracts, from the data storing section 102, the file of an identical data ID to the data ID corresponding to "protection" as the protection determination (I). It is to be noted that a file stored in the data storing section 102 is assigned a data ID, as described in the "data storage" section with reference to the example of address book, and associated with the data ID (E) of the additional information of Fig. 9. The data managing section 101, in a step S202, transfers the data item to be transferred (e.g., the address book, or destination setup information of Fig. 9) to a destination (the communication device 200 in this case) that has been confirmed to exist in the data destination determining process at S101, via the communicating section 103. The process then proceeds to a determining step S203.

### (Communication device 200)

In the communication device 200 receiving the data, the data updating section 205 manages the data item (e.g., the address book) received via the receiving section 201 by assigning ID information. The communication device 200 is capable of determining, with reference to the assigned ID information, whether or not an identical data item (an address book) to the received data item (the address book) is stored in the data memory section 203 therein. It is to be noted that data items included in the file of address book (data component name (A) or component (B)) are not necessarily identical to the received data item if the data items carry the same data name (file name), address book. Therefore, it is also possible that the data updating section 205 performs one of the following data updating processes:
(1) writing the received data item over the current data item;
(2) saving the received data item as a different data item; and
(3) saving the received data item with differences merged, as the latest version,
when an identical data item (an address book) to the received data (the address book) has already been stored. It is still also possible that the data updating section 205 may always assign higher priority to its own data item (file) stored therein than a received file, or assign higher priority to a received data item (file), vice versa, and then data may be overwritten by a file having higher priority.

In a processing step S204, the data managing section 101, when determining that the transfer of a data item to be transferred (by using an ACK based delivery confirmation mechanism, such as TCP, for example) is completed in the determining step S203, deletes a data item that has been transferred from the data storing section 102. The process is then terminated. In S204, the data managing section 101 may delete a data item assigned "destruction" as the protection determination (I) of Fig. 9. The data delete operation in S204 may be performed for each data item, or for all data items that have been transferred at the end of the data transfer operation. At the determining step S203, a data item is not usually deleted if determined that it has not yet been transferred, and then the process is terminated. However, if higher priority is assigned to deletion than protection, then it is also possible to delete a data item that has not yet been transferred. Alternatively, this option may be applied for each data item.

The communication apparatus 110 of the first embodiment, being thus equipped with the event detecting section and the data managing section, may be allowed to automatically save data items that one wishes to protect, in the communication device 200 upon detection of the predetermined event.

The communication apparatus 110 of the first embodiment, being thus equipped with the event detecting section and the data managing section, may be allowed to automatically save data items that one wishes to protect, upon detection of the predetermined event, without leaving the data behind in a vehicle.

The communication apparatus 110 of the first embodiment, being thus equipped with the power supply managing section and the data managing section, may be allowed to automatically save data items that one wises to protect, in the communication device 200, when the power is turned OFF.

The communication apparatus 110 of the first embodiment, thus storing the protected data definition information therein, may be allowed to automatically extract data items that one wishes to protect.

The communication apparatus 110 of the first embodiment, being thus equipped with the data managing section 101 deleting data items that have been transferred, may prevent identical data to the data items that have been transferred from being stolen.

The mobile terminal apparatus of the first embodiment, thus receiving data to be transferred from the communication apparatus 110, may be allowed to save data items that one wishes to protect without difficulty.

The mobile terminal apparatus of the first embodiment, thus updating data stored therein based on received data to be transferred, from the communication apparatus 110, may be allowed to improve the convenience of data stored therein.

### Embodiment 2.

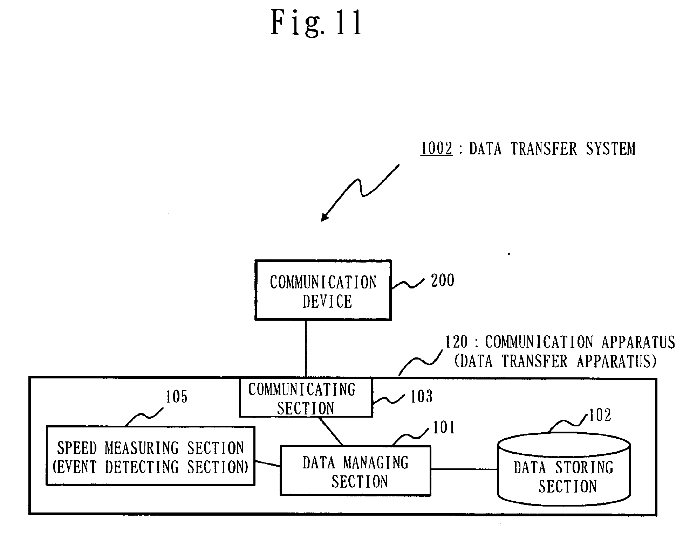

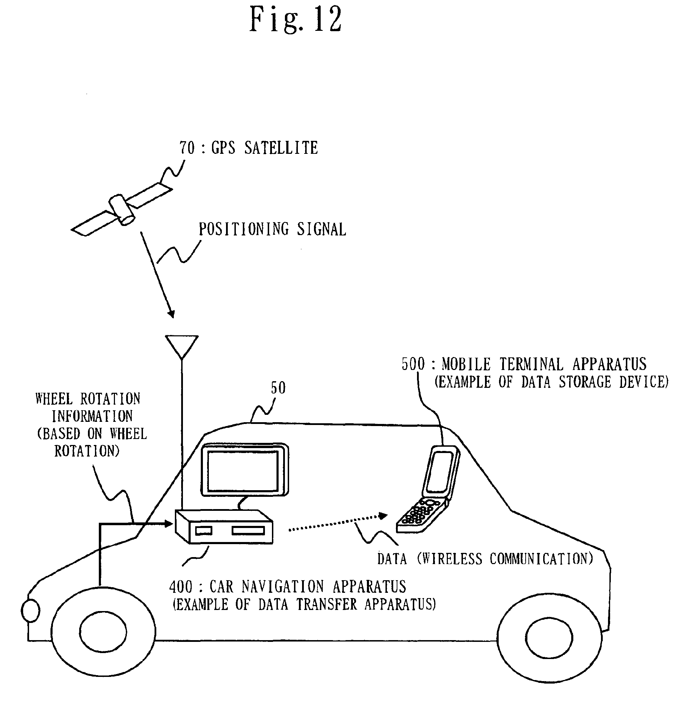

A second embodiment is now described with reference to Fig. 11 and Fig. 12. The communication apparatus 110 of the first embodiment transfers data upon detection of the power OFF event. A communication apparatus 120 of the second embodiment transfers data upon detection of a stopped state of a vehicle 50 (an example of a mobile object) on which the communication apparatus 120 is mounted. A data transfer apparatus of the second embodiment may automatically transfer data that one does not want anyone else to steal, to a separate device, without requiring any human operation. It is to be noted that, in the following descriptions, if a communication apparatus (a data transfer apparatus) is equipped with a speed measuring section, the communication apparatus is assumed to be mounted in a mobile object (e.g., an automobile). The speed measuring section detects whether or not the speed of the mobile object, on which the communication apparatus is mounted, is zero.

Fig. 11 shows a system configuration of a data transfer system 1002 according to the second embodiment. The configuration of Fig. 11 modifies that of Fig. 4 by replacing a speed measuring section 105 for the power supply managing section 104. As shown in Fig. 11, the data transfer system 1002 may include the communication apparatus 120 and the communication device 200. Elements shown in Fig. 11 equivalent or corresponding to those shown in Fig. 4 are assigned the same reference numerals as those of Fig. 4, and will not be described here.

Referring to Fig. 11, the speed measuring section 105 (an example of an event detecting section) may detect whether or not the speed of the automobile 50 (a mobile object), on which the communication apparatus 120 including the speed measuring section 105 is mounted, is zero. More specifically, the speed measuring section 105 may detect the stopped state of the automobile.

According to the first embodiment, the data managing section 101 transfers data upon detection of the power OFF state. According to the second embodiment, the data managing section 101 may transfer data when the speed measuring section 105 detects the stopped state of the automobile 50 on which the speed measuring section 105 is mounted. This is a difference between the first and second embodiments. Other operations in the second embodiment are identical to the operations performed in the first embodiment.

Fig. 12 shows a concrete example how the data transfer system of the second embodiment is used. The communication apparatus 120 (a data transfer apparatus) is implemented as the car navigation apparatus 400. The communication device 200 (a data storage device) is implemented as the mobile terminal apparatus 500. The speed measuring section 105 may receive wheel rotation information indicating the wheel rotation of the automobile 50, and thereby detect the stopped state of the automobile 50 based on the value of the received wheel rotation information. Alternatively, the car navigation apparatus 400 may be equipped with a Global Positioning System (GPS) measuring section (not shown in the figure). In this case, the speed measuring section 105 may receive position information from the GPS measuring section, and thereby detect the stopped state of the automobile 50 based on temporal change in the received position information.

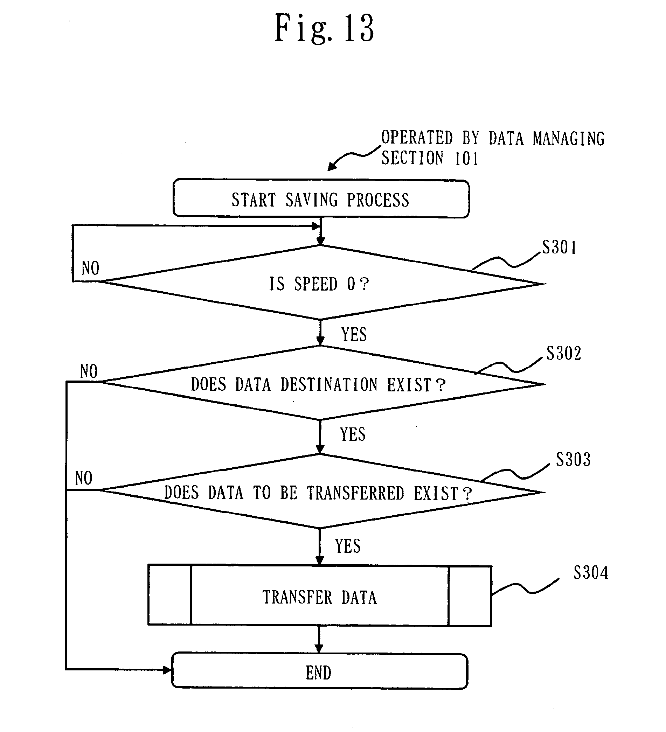

A data saving operation of the second embodiment is now described with reference to Fig. 13. Fig. 13 shows a flow chart illustrating a data saving process. The flow chart of Fig. 13 modifies the flow chart of Fig. 6 by replacing S302 for S202. In S101 of the first embodiment, the power supply managing section 104 (an example of an event detecting section) detects the power OFF event. In S301 of the second embodiment, however, the speed measuring section 105 (an example of an event detecting section) may detect the stopped state of the automobile 50. The operation of Fig. 13 is identical to the operation of Fig. 6, and therefore explained briefly.

(1) In the determining step S301, the data managing section 101 determines whether or not the automobile 50 is in the stopped state (or the speed is zero) with reference to the speed detected by the speed measuring section 105. The data managing section 101, while performing a standby operation not shown in the figures, regularly checks and confirms whether or not the speed is zero (or the automobile 50 is in the stopped state) with reference to detection results by the speed measuring section 105, when determining that the speed is not zero in the determining step S301 (No at the determining step S301).
(2) In the determining step S302, the data managing section 101 performs a determining process whether or not a data transfer destination exists, when determining that a speed-zero state (or that the automobile 50 is in a movement stopped state) is detected in the determining step S301 (YES at the processing step S301).

The subsequent processes of S302 to S304 are identical to those in S102 to S104 of Fig. 6, and therefore will not be described here.

A data transferring process of S304 is identical to that of S204 (Fig. 10), and therefore will not be described here.

The communication apparatus 120 according to the second embodiment, being thus equipped with the speed measuring section and the data managing section, may be allowed to automatically save data items that one wises to protect, in the communication device 200, when the automobile 50 on which the communication apparatus 120 is mounted stops.

### Embodiment 3.

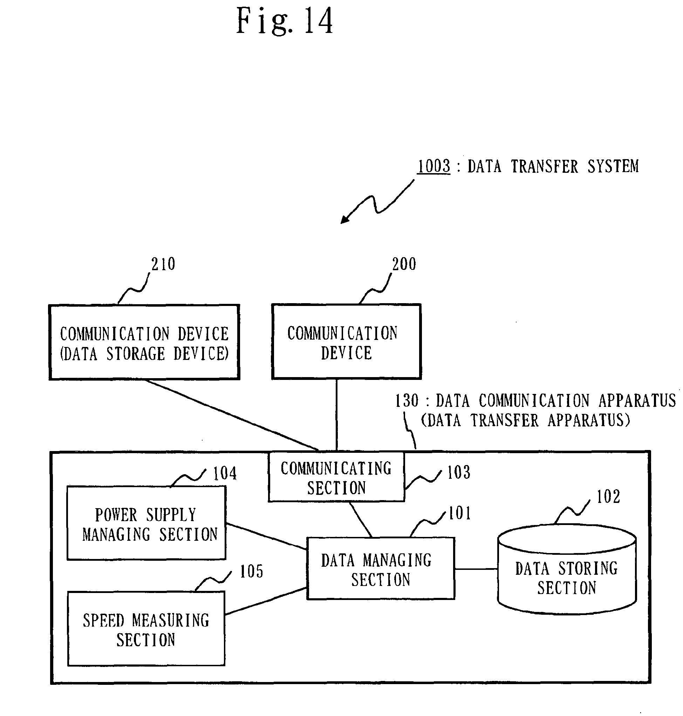

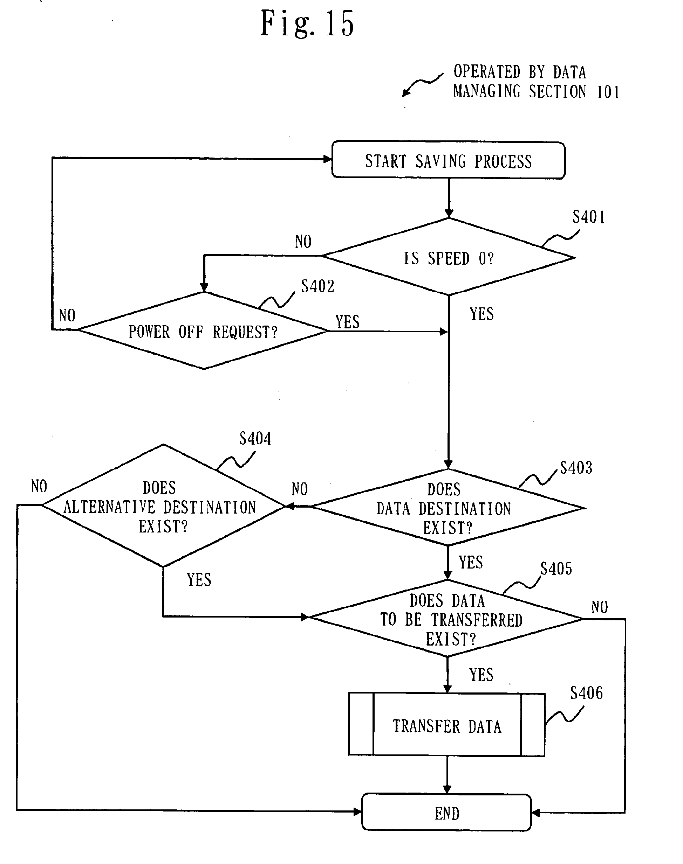

A third embodiment is now described with reference to Fig. 14 and Fig. 15. Fig. 14 shows a configuration of a data transfer system 1003 according to the third embodiment. A communication apparatus 130 of the third embodiment may be characterized in that:
(1) The communication apparatus 130 (an example of a data transfer apparatus) of the third embodiment is equipped with both the power supply managing section 104 described in the first embodiment and the speed measuring section 105 described in the second embodiment. The communication apparatus 130 of the third embodiment, as shown in Fig. 15 described later, executes a data transfer process, upon detection of the stopped state of the automobile 50 by the speed measuring section 105. Upon detection of a moving state of the automobile 50 by the speed measuring section 105, the communication apparatus 130 executes the data transfer process when the power supply managing section 104 detects the power OFF event.
(2) Also, in the communication apparatus 130 of the third embodiment, the data managing section 101 acknowledges a plurality of prespecified data storage devices by assigning priority. Then, the communication apparatus 130 transfers data to a data storage device whose priority is high and which is available for communication, among the plurality of acknowledged data storage devices. In the example of Fig. 14, the data managing section 101 stores the communication device 200 and the communication device 210 as prespecified data storage devices. The data managing section 101 acknowledges the communication device 200 having higher priority than the communication device 210.

As shown in Fig. 14, the data transfer system 1003 includes the communication apparatus 130, the communication device 200 and the communication device 210. The communication device 200 and the communication device 210 are registered by the commutation device 130 in advance as communication destinations, and receive data from the communication apparatus 130.

(1) The data managing section 101 may extract a data item to be protected from data items stored in the data storing section 102.
(2) The data managing section 101 may determine whether or not to save the data item based on the state of power supply and the state of the speed of the automobile 50 by using the power supply managing section 104 and the speed measuring section 105. The data managing section 101 may also determine whether or not to delete a data item that has been saved.
(3) The data managing section 101 may determine whether or not the data item can be saved in the communication device 200 specified as the first destination. If the communication device 200 is available, then the data managing section 101 save the data item in the communication device 200. If the communication device 200 is not available, then the data managing section 101 save the data item in the communication device 210 specified as the second destination.
(4) The data managing section 101 may delete the data item that has been saved, upon confirmation of the completion of the saving process.

A data saving operation is now described with reference to Fig. 15. Fig. 15 illustrates a series of saving operations of protected data according to the third embodiment. It is to be noted that the process of S405 to determine whether or not data to be transferred exists, and the process of S406 to transfer data are identical to the processes of S103 and S104, respectively, of Fig. 6.

(1) In S401, the data managing section 101 determines whether or not the automobile is in a stopped state based on the speed of the automobile by using the speed measuring section 105.
(2) In S402, the data managing section 101 determines whether or not the power OFF request event exists, by using the power supply managing section 104, when determining that the automobile is not in the stopped state (NO at S401).
(3) The data managing section 101, when determining that the power OFF request does not exist (No at S402), regularly checks and confirms whether or not the speed measuring section 105 detects zero of speed, while performing the standby operation not shown in the figure.
(4) In S403, the data managing section 101 determines whether or not a data transfer destination exists, when determining that the speed is zero (in the stopped state) (YES at S401), or when determining that the power OFF request event is detected (YES at S402).
(5) In S403, the data managing section 101 determines whether or not the communication device 200 previously specified as the first data destination is available for communication.
(6) The data managing section 101, when determining that the communication device 200 is available for communication (YES at S403), sets the communication device 200 as the transfer destination of the data item from the communicating section 103. The process then proceeds to S405.
(7) When the data managing section 101 determines that the communication device 200 is not available for communication (NO at S7403), the process proceeds to S404. In S404, the data managing section 101 determines whether or not an alternative transfer destination exists.
(8) The determination in S403 may be performed by using the communicating section 103 in the same manner as that described in the first embodiment. Alternatively, the determination process on whether or not a data transfer destination exists may be performed as follows: Commands for exchanging the state information of a device, such as Ping or the like, may be exchanged in advance (or regularly) between the communication apparatus 130 and the communication device 200. The state information may be stored in a memory not shown in the figure, and updated regularly for use.
(9) In S404, the data managing section 101 determines whether or not the communication device 210 specified as the second data transfer destination is available for communication.
(10) The data managing section 101, when determining that the communication device 210 is available for communication (YES at S404), then sets the communication device 210 as the destination of the data item from the communicating section 103. The process then proceeds to S405.
(11) The data managing section 101, when determining that no alternative data transfer destination exists (NO at S404), then the process is terminated. The determination of the step S404 may be performed by using the communicating section 103 in the same manner as that described in S403. Like S403, it is also possible to perform the determination process of S404 as follows: Commands for exchanging the state information of a device, such as Ping or the like, may be exchanged in advance (or regularly) between the communication apparatus 130 and the communication device 200. The state information may be stored in a memory not shown in the figure, and updated regularly for use.
(12) In S405, the data managing section 101 determines whether or not a data item to be transferred exists. As mentioned earlier, it should be noted that S405 to determine whether or not a data item to be transferred exists, and S406 to transfer data of the third embodiment are identical to those of S103 and S104, respectively, of Fig. 6. Therefore, S405 and S406 will not be described here.

The communication apparatus 130 according to the third embodiment, thus acknowledging the plurality of data transfer destinations with priority assigned, may be allowed to save data items that one wishes to protect, with more certainty.

### Embodiment 4.

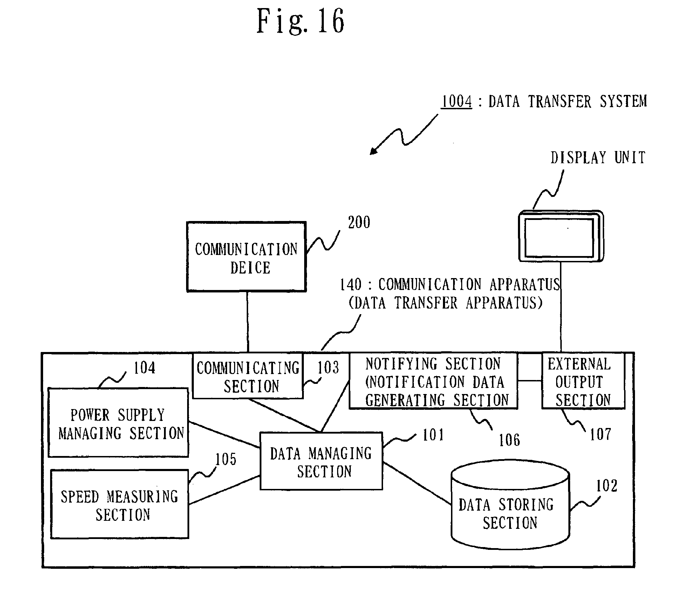

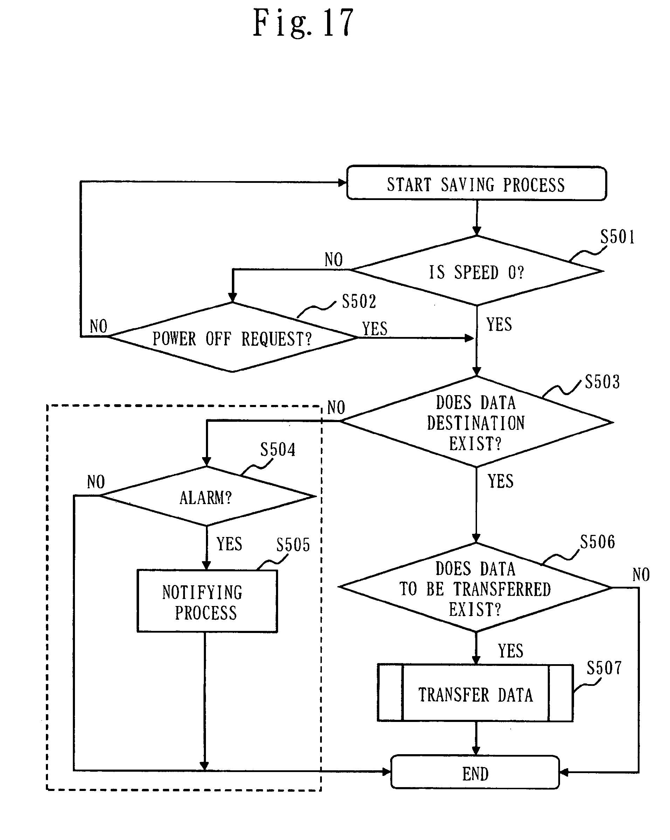

A fourth embodiment is now described with reference to Fig. 16 and Fig. 17. Fig. 16 shows a configuration of a data transfer system 1004 according to the fourth embodiment. The fourth embodiment may be characterized as follows: A communication apparatus 140 (an example of a data transfer apparatus) of the fourth embodiment modifies the communication apparatus 130 of the third embodiment by adding a notifying section 106 (a notification data generating section) and an external output section 107. The notifying section 106 is controlled by the data managing section 101 to generate notification data to be outputted to the external output section 107, and output the generated notification data to the external output section 107, when a device as a data transfer destination is not available for communication (or when no destination device exists). The "notification data" may be control information to make an external device (a display, a speaker, etc.), which will be described later, notify of information. The external output section 107, upon receipt of the notification data from the notifying section 106, outputs graphics, voice or the like to an external device (a display, a speaker, a vibratory device, etc.) according to the received notification data.

### (Function of the data managing section 101)

(1) The data managing section 101 may extract a data item to be protected from data items stored in the data storing section 102.
(2) The data managing section 101 may use the power supply managing section 104 and the speed measuring section 105 to determine whether or not to save the data item and delete the data item that has been saved, according to the state of power supply and the state of the speed of an automobile.
(3) The data managing section 101 may determine whether or not the data item can be saved in the communication device 200 specified as a saving destination. If the saving is possible, then the data managing section 101 may save the data item to be saved in the communication device 200 via the communicating section 103.

### (Characteristic features of the data managing section 101 according to the fourth embodiment)

(4) If the saving of data to the communication device 200 is not possible, then the data managing section 101 may use the notifying section 106 to generate the notification data, by selecting the type of data (image, text, or voice) to be used for notifying that data cannot be saved, and outputs the generated notification data to the external output section 4001.
(5) The data managing section 101 may delete, from the data storing section 102, the data item that has been saved, after confirmation that the saving operation has been completed.

A data saving operation is now described with reference to Fig. 17. Fig. 17 is similar to Fig. 15. The flow chart of Fig. 17 modifies the flow chart of Fig. 15 by adding a portion of S504 and S505 enclosed by a dashed line.
(1) In S501, the data managing section 101 uses the speed measuring section 105 to determine the state of speed (the stopped state of the automobile 50).
(2) In 502, the data managing section 101 uses the power supply managing section 104 to determine whether or not the power OFF request event exists, when determining that the speed is not zero (NO at S501).
(3) The data managing section 101, while performing a standby operation, regularly checks and confirms whether or not the speed is zero (the stopped state of the automobile 50) by the speed measuring section 105, when determining that there is no power OFF request (NO at S502).
(4) In S503, the data managing section 101 determines whether or not a data transfer destination exists, when determining that the speed is zero (the automobile 50 is in the stopped state) (YES at S501), or that the power OFF request event is detected (YES at S502).
(5) In S503, the data managing section 101 first determines whether or not the communication device 200, specified as a data transfer destination, is available for communication.
(6) The data managing section 101, when determining that the communication device 200 is available for communication (YES at S503), sets the communication device 200 as the transfer destination of the communicating section 103. The process then proceeds to S506.
(7) When the data managing section 101 determines that the communication device 200 is not available for communication (NO at S503), the process proceeds to S504. In S504, the data managing section 101 determines whether or not an alarm is generated. The determination condition in S504 will be described later. Determination may be performed at S503 by using the communicating section 103 in the same manner as that described in the first embodiment.
(8) In S504, the data managing section 101 determines whether or not to notify the external device (a speaker, a display or the like) by using the external output section 107 that communication is not possible with the communication device 200 as a data transfer destination. Fig. 16 shows a display unit as an example of the external device. The determination of S504 may be performed as follows: The data managing section 101 determines whether or not the notifying section 106 holds alarm data (notification data), and whether or not a device (a speaker, a display or the like) allowing the held data to be outputted via the external output section 107 exists (or is available for use). The data managing section 101 determines to issue an alarm, when confirming that the notifying section 106 holds alarm data (notification data) and that there is a device to output the held data (notification data) via the external output device 107.
(9) When the data managing section 101 determines to issue alarm (YES at S504), the process then proceeds to a notifying process of S506. In S505, the data managing section 101 outputs notification data selected by the notifying section 106 to a specified output device via the external output section 107. This terminates the process. The notifying section 106 may previously assign priority to alarm data. Each data item held by the notifying section 106 may be managed by specifying the type of an external device available for outputting the data item. The data managing section 101 may determine which data item to use based on priority.
(10) The subsequent processes of S506 and S507 are identical to those discussed in the first embodiment.

The communication apparatus 140 according to the fourth embodiment, being thus equipped with the notifying section and the external output section, may allow a user to acknowledge such a situation with ease that data cannot be transferred to the device to which the data should be transferred.

### Embodiment 5.

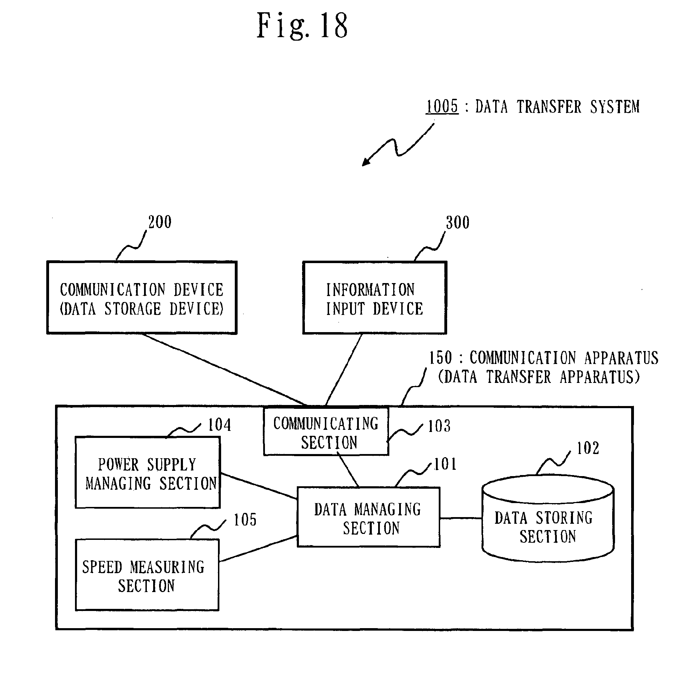

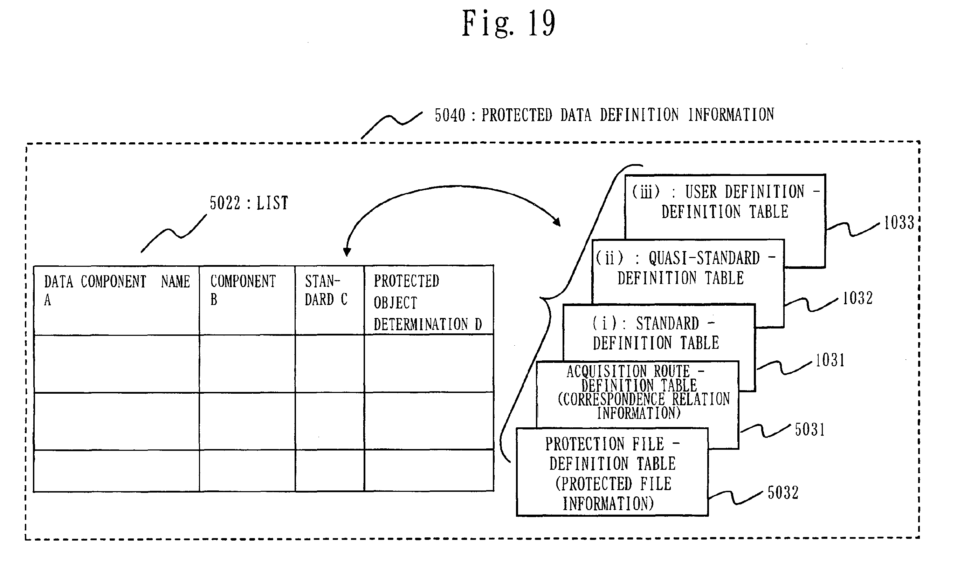

A fifth embodiment is now described with reference to Fig. 18 and Fig. 19. In the fifth embodiment, a determination on whether or not data is transferred is performed based on a data acquisition route of received data.

Fig. 18 shows a configuration of a data transfer system 1005 according to the fifth embodiment. The data transfer system 1005 may include a communication apparatus 150, the communication device 200 and an information input device 300 that provides predetermined information. The information input device 300 may transmit data to be handled by the communication apparatus 150 to the communication apparatus 150.
(1) The data managing section 101 of the communication apparatus 150 may store data transmitted by the information input device 300 in the data storing section 102.
(2) The data managing section 101 may store data in the data storing section 102 by managing the acquisition route of the data. More specifically, the data managing section 101, upon acquisition of data from the information input device 300, may add acquisition route information, indicating that the data has been acquired from the information input device 300, to the data before storing the data.
(3) The protected data definition information stored in the data storing section 102 may include an acquisition route - definition table 5031 (correspondence relation information) indicating a correspondence relation between the acquisition route of data and whether or not the data is to be protected.
(4) The data managing section 101 may extract a data item to be transferred from data items stored in the data storing section 102 based on the acquisition route - definition table 5031 included in the protected data definition information, and transfer the extracted data to the communication device 200. More specifically, the data managing section 101 may generate an additional information list 5050described later, based on the acquisition route - definition table 5031.

The communication apparatus 150 (an example of a data transfer apparatus) of the fifth embodiment modifies the communication apparatus 110 of the first embodiment by adding protected data definition information 5040 shown in Fig. 19. The protected data definition information 5040 modifies the protected data definition information 1040 by adding the acquisition route - definition table 5031 indicating the correspondence relation between the acquisition route of data and whether or not the data is to be protected, and a protection file - definition table 5032 (protected file information) specifying files to be protected.

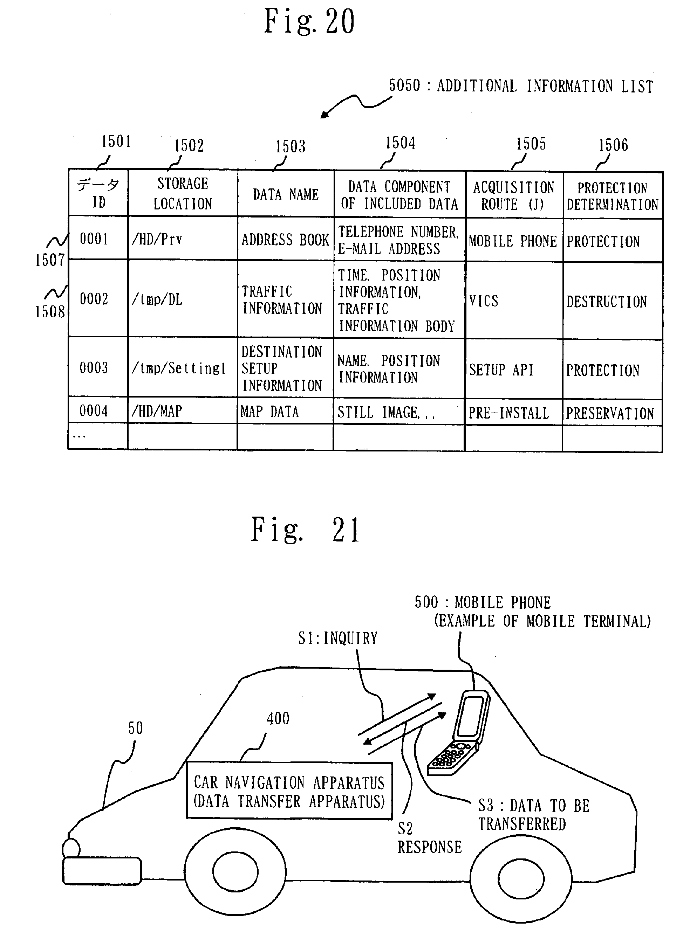

Fig. 20 shows the additional information list 5050 generated by the data managing section 101. The additional information list 5050 is now described. It is to be noted that the data saving operation of the communication apparatus 150 is identical to that of the communication apparatus 130 of the third embodiment. Therefore, the data saving operation is explained with reference to the flow chart of Fig. 15.

The data managing section 101 generates the additional information list 5050 instead of the additional information list 1050 of Fig. 9 described in the first embodiment. The additional information list 5050 modifies the additional information list 1050 of Fig. 9 by adding an "acquisition route (J)" in a column 1505. The data managing section 101 may determine whether or not data to be transferred exists, with reference to the additional information list 5050 generated in advance, in the determining process in S405.

As the "acquisition route (J)", a type of data acquired from the information input device 300 by the communicating section 103 of Fig. 18 is set. The types of data may be:
(a) by way of a mobile phone,
(b) by way of a Vehicle Information and Communication system (VICS),
(c) by way of a GPS receiver,
(d) by a user input via a set application, or data generated inside an application, and
(e) by pre-installation with shipment.

(1) It is indicated, for example, that "address book" in a row 1507 is data acquired by way of a mobile phone. With reference to the first embodiment, the data managing section 101 determines "protection", "destruction" or "preservation" based on "data component name or component of included data (H)". According to the fifth embodiment, however, the data managing section 101 may determine "protection", "destruction" or "preservation" based on the "acquisition route (J)". The protected data definition information 5040 in Fig. 19 includes the acquisition route - definition table 5031. For example, the acquisition route - definition table 5031 may include a definition of "an 'address book' is to be protected in the case of a mobile phone as the acquisition route of the 'address book'." Based on this definition, the data managing section 101 may determine that the "address book" acquired by way of a mobile phone is protected by assigning "protection" as protection determination (I).
(2) It is also possible that "protection", "destruction" or "preservation" of protection determination (I) is determined for each file generated by an application that inputted or generated data. The protected data definition information 5040 stored in the data storing section 102 includes the protection file - definition table 5032 (protected file information) specifying files to be protected. The data managing section 101 may extract a file specified by the protection file - definition table 5032 from data items stored in the data storing section 102, based on the protection file - definition table 5032, and then transfer an extracted file to the communication device 200.
(3) It is still also possible that the data managing section 101 determines the value (protection, destruction, preservation, etc.) of the protection determination (I), based on the "data component name or component of included data (H)", as described in the first embodiment.
(4) As described in the first embodiment, the communication apparatus 150 may receive, from the information input device 300 (an information transmitting device), the "address book" (an example of protection indication information added data) with the protection indication information, indicating that the "address book" is to be protected, being added. The data managing section 101 may then store the "address book" in the data storing section 102. The data managing section 101, when transferring data, may transfer the "address book" stored in the data storing section 102 to the communication device 200 via the communicating section 103.
(5) If those alternatives described in (1) to (4) are defined in the protected data definition information 5040 of Fig. 19, it is free to combine those alternatives. The data managing section 101 may generate the additional information list 5050 and determine data to be transferred, based on the protected data definition information 5040 defined by combinations of (1) to (4) above.

The communication apparatus 150 according to the fifth embodiment, being thus equipped with the protected data definition information including the acquisition route - definition table (correspondence relation information), may be allowed to do a flexible setup and an automatic extraction of a data item that one wishes to protect.

The communication apparatus 150 according to the fifth embodiment, being thus equipped with the protected data definition information including the protection file - definition table (protected file information), may be allowed to do a flexible setup and an automatic extraction of a data item that one wishes to protect.

The data managing section 101 according to the fifth embodiment, thus transferring the protection indication information added data stored in the data storing section 102 to the communication device 200 via the communicating section 103 when the event detecting section detects a predetermined event, may be allowed to do a flexible setup and an automatic extraction of a data item that one wishes to protect.

### Embodiment 6.

A sixth embodiment is now described with reference to Fig. 21. According to the sixth embodiment, a data transfer apparatus may transmit an inquiry to give prior notice of data transfer to a data storage device prior to transmitting data to the data storage device from the data transfer apparatus. This is explained with reference to the case described in the first embodiment where the power OFF event is detected, as an example.

Referring to Fig. 21, the car navigation apparatus 400 (a data transfer apparatus) corresponds to the communication apparatus 110 described in the first embodiment, and the mobile terminal apparatus 500 (a data storage device) corresponds to the communication device 200. The car navigation apparatus 400 is now explained with reference to Fig. 4, and the mobile terminal apparatus 500 is explained with reference to Fig. 5.
(1) The data managing section 101 of the car navigation apparatus 400 may transmit an inquiry to give the prior notice of data transfer (prior notice information) to the mobile terminal apparatus 500 via the communicating section 103, when the power supply managing section 104 detects a power OFF event (S1).
(2) The receiving section 201 of the mobile terminal apparatus 500 may receive the inquiry from the car navigation apparatus 400. The mobile terminal apparatus 500, upon receipt of the inquiry, may display the content of the inquiry on the display unit. The display may allow a user of the mobile terminal apparatus 500 to respond to the inquiry by a predetermined operation.
(3) The data requesting section 204 may generate response information in response to the inquiry by receiving the user's predetermined operation, when the receiving section 201 receives the inquiry from the car navigation apparatus 400, and transmit generated response information to the car navigation apparatus 400 via the transmitting section 202 in return (S2).
(4) The data managing section 101 of the car navigation apparatus 400 may transfer data stored in the data storing section 102 to the mobile terminal apparatus 500, when receiving the response information via the communicating section 103 (S3).

This is an explanation of this embodiment with reference to the example of the first embodiment. The same may be applied to the case where the stopped state of an automobile is detected of the second embodiment. It is also obvious that the same may be applied to the cases of the third to fifth embodiments.

The car navigation apparatus 400 according to the sixth embodiment, thus transferring data only when receiving a reply to a transmitted inquiry, may allow the mobile terminal apparatus 500 side to receive no data when there is no need of transferring data.

The mobile terminal apparatus according to the sixth embodiment, thus determining whether or not to receive data transferred from the car navigation apparatus 400, may allow a user of the mobile terminal apparatus to refuse to receive data if it is not needed.

### Embodiment 7.

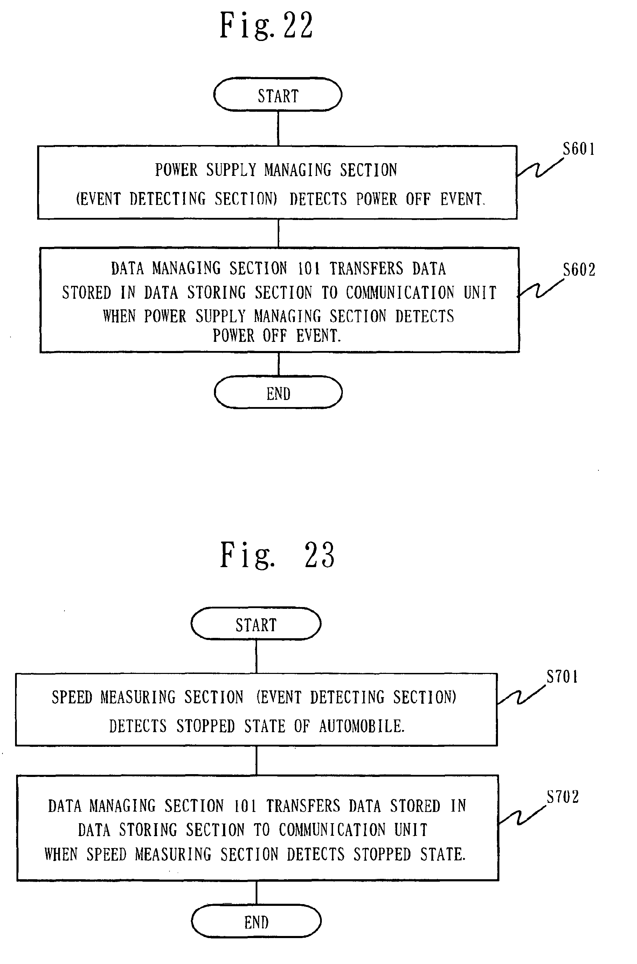

A seventh embodiment is now described with reference to Fig.22 to Fig. 25. The seventh embodiment relates to a data transfer method and a data transfer program. The operations of the respective elements of the communication apparatus (a data transfer apparatus), such as the data managing section 101, described in the first or second embodiment are related to each other. This series of operations may be translated as a data transfer method performed by a data transfer apparatus.

Fig. 22 and Fig. 23 show flow charts illustrating data transfer methods corresponding, respectively, to the first embodiment (the power OFF event) and the second embodiment (the stopped state event).

Referring to Fig. 22:
(1) In S601, the power supply managing section (an event detecting section) detects the power OFF event indicating the cutting off of operating power for the data communication apparatus; and
(2) In S602, the data managing section 101 transfers data stored in the data storing section to the communication device (a data storage device) via the communicating section, when the power supply managing section detects the power OFF event.

Referring to Fig. 23:
(1) In S701, the speed measuring section (an event detecting section) detects the stopped state of the automobile (a mobile object) on which the communicating apparatus is mounted; and
(2) In S702, the data managing section 101 transfers data stored n the storing section 102 to the communication device (a data storage device) via the communicating section, when the speed measuring section detects the stopped state.

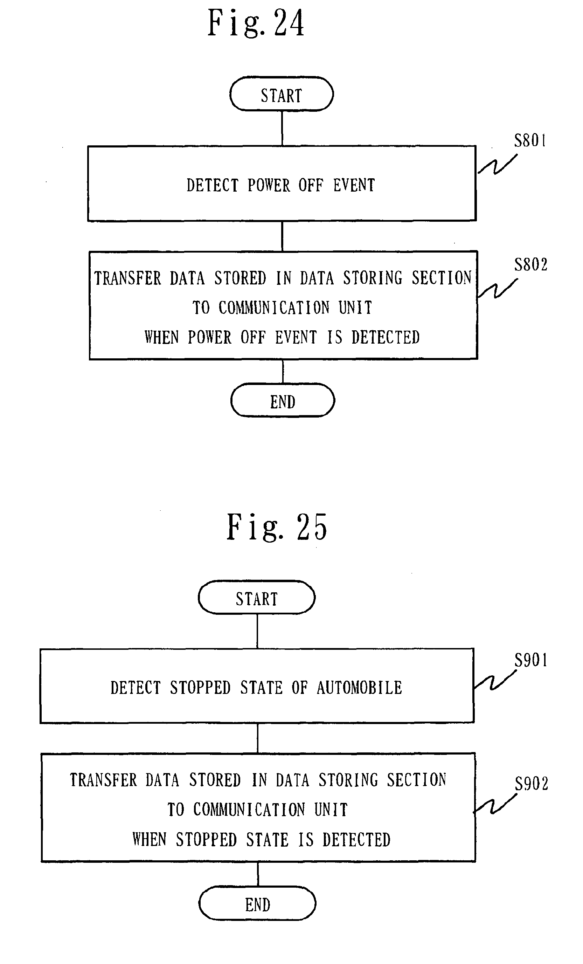

The data transfer method may be interpreted as a data transfer program that causes the data transfer apparatus of a computer to carry out the data transfer method. Fig. 24 and Fig. 25 show flow charts illustrating data transfer programs corresponding respectively to the first embodiment (the power OFF event) and the second embodiment (the stopped state event).

Referring to Fig. 22:,
(1) In S801, the process of detecting the power OFF event indicating the cutting off of operating power for the communication apparatus is performed; and
(2) In S802, the process of transferring data stored in the data storing section to the communication device (a data storage device) via the communicating section, when the power OFF event is detected, is performed.

Referring to Fig. 23:
(1) In S901, the process of detecting the stopped state of the automobile (a mobile object), on which the communication apparatus is mounted, is performed; and
(2) In S902, the process of transferring data stored in the data storing section 102 to the communication device (a data storage device) via the data communicating section, when the stopped state is detected, is performed.

The data transfer method according to the seventh embodiment may allow for an automatic transfer of data items that one wishes to protect.

The data transfer program according to the seventh embodiment may allow for an automatic transfer of data items that one wishes to protect.

### Brief Description of the Drawings

Fig. 1 shows an example of how a data transfer system is used according to a first embodiment.
Fig. 2 shows a different example of how a data transfer system is used according to the first embodiment.
Fig. 3 shows a hardware configuration of a communication apparatus according to the first embodiment.
Fig. 4 shows a configuration of a data transfer system according to the first embodiment.
Fig. 5 shows a block diagram of a data storage device according to the first embodiment.
Fig. 6 shows a flow chart illustrating a data saving process performed by a data managing section according to the first embodiment.
Fig. 7 shows a data list according to the first embodiment.
Fig. 8 shows protected data definition information according to the first embodiment.
Fig. 9 shows an additional information list according to the first embodiment.
Fig. 10 shows a flow chart illustrating a data transferring process performed by a data managing section according to the first embodiment.
Fig. 11 shows a configuration of a data transfer system according to a second embodiment.
Fig. 12 shows an example how a data transfer system is used according to the second embodiment.
Fig. 13 shows a flow chart illustrating a data saving process performed by a data managing section according to the second embodiment;
Fig. 14 shows a system configuration of a data transfer system according to a third embodiment.
Fig. 15 shows a flow chart illustrating a data saving process performed by a data managing section according to the third embodiment;
Fig. 16 shows a system configuration of a data transfer system according to a fourth embodiment;
Fig. 17 shows a flow chart illustrating a data saving process performed by a data managing section according to the fourth embodiment;
Fig. 18 shows a system configuration of a data transfer system according to a fifth embodiment.
Fig. 19 shows protected data definition information according to the fifth embodiment.
Fig. 20 shows an additional information list according to the fifth embodiment.
Fig. 21 shows an example how a data transfer system is used according to a sixth embodiment.
Fig. 22 shows a flow chart illustrating a data transfer method according to a seventh embodiment.
Fig. 23 shows a flow chart illustrating a data transfer method according to the seventh embodiment.
Fig. 24 shows a flow chart illustrating a data transfer program according to the seventh embodiment.
Fig. 25 shows a flow chart illustrating a data transfer program according to the seventh embodiment.

### Explanation of Reference Numerals

- A: data component name
- B: component
- C: standard
- D: protected object determination
- E: data ID
- F: storage location
- G: data name
- H: data component name or component of included data
- I: protection determination
- J: acquisition route
- 50: automobile
- 70: GPS satellite
- 101: data managing section
- 102: data storing section
- 103: communicating section
- 104: power supply managing section
- 105: speed measuring section
- 106: notifying section
- 107: external output section
- 110,120,130,140,150: communication apparatus
- 200: communication device
- 201: receiving section
- 202: transmitting section
- 203: data memory section
- 204: data requesting section
- 205: data updating section
- 210: communication device
- 300: information input device
- 400: car navigation apparatus
- 500: mobile terminal apparatus
- 501: receiving section
- 502: transmitting section
- 503: data storing section
- 504: data requesting section
- 600: personal computer
- 810: CPU
- 811: ROM
- 812: RAM
- 813: display unit
- 814: operation key
- 816: communication board
- 820: magnetic disk drive
- 821: OS
- 822: window system
- 823: program group
- 824: file group
- 826: data storage area
- 1001-1005: data transfer system
- 1020: data
- 1022: data list
- 1031: standard - definition table
- 1032: quasi-standard - definition table
- 1033: user definition - definition table
- 1040: protected data definition information
- 1050: additional information list
- 5022: data list
- 5031: acquisition route - definition table
- 5032: protection file - definition table
- 5040: protected data definition information
- 5050: additional information list

## Claims

1. A data transfer apparatus (110, 120, 130, 140, 150, 400), which is mounted on a automobile, comprising:
a communicating section (103) that is adapted to communicate with a previously specified data storage device (200),
a data storing section (102) that is adapted to store data,
an event detecting section (104, 105) that is adapted to detect a predetermined event, and
a data managing section (101) that is adapted to transfer the data stored in the data storing section (102) to the data storage device (200), via the communicating section (103), when the event detecting section (104, 105) detects the predetermined event;
**characterized in that** the data managing section is adapted to determine whether or not the automobile is in a stopped state based on the speed of the automobile and when determining that the automobile is not in a stopped state the event detecting section (104, 105) detects a power OFF event, as the predetermined event, indicating a cutting off of operating power for the data transfer apparatus, to which the event detecting section belongs;
wherein the data storing section (102) is adapted to store protected data definition information that defines data to be protected; and
wherein the data managing section (101) is adapted to extract a data item to be transferred from among items of the data stored in the data storing section (102), based on the protected data definition information stored in the data storing section (102), and to transfer an extracted data item to the data storage device (200);
wherein an acquisition route of the data stored in the data storing section (102), indicating that the data has been acquired from an information input device, is managed,
wherein the protected data definition information stored in the data storing section (102) includes correspondence relation information indicating a correspondence relation between the acquisition route of the data and whether the data is to be protected, and
wherein the data managing section (101) is adapted to extract the data item to be transferred from among the items of the data stored in the data storing section (102), based on the correspondence relation information stored in the data storing section (102), and to transfer an extracted data item to the data storage device (200).

2. The data transfer apparatus according to claim 1, wherein the data managing section (101) is adapted to determine whether or not to transfer data based on the state of the power supply and the state of the speed of the mobile object (50), and when determining that the speed is zero or a power OFF request event is detected, to identify a plurality of previously specified data storage devices (200) by assigning priority, and to transfer data to a data storage device (200) whose assigned priority is high and which is confirmed to be available for communication among the plurality of data storage devices identified.

3. The data transfer apparatus according to claim 1, wherein the protected data definition information stored in the data storing section (102) includes protected file information that specifies a file to be protected, and
wherein the data managing section (101) is adapted to extract the file specified by the protected data definition information from among the items of the data stored in the data storing section (102), based on the protected file information included in the protected data definition information, and to transfer an extracted file to the data storage device (200).

4. The data transfer apparatus according to claim 1, wherein the data managing section (101) is adapted to, after transferring an item of the data stored in the data storing section (102) to the data storage device (200), delete an identical data item to a transferred data item from the data stored in the data storing section (102).

5. The data transfer apparatus according to claim 1,
wherein the data transfer apparatus is a car navigation apparatus (400) and the data storage device is a mobile terminal apparatus (500) with a display,
wherein the data storage device (200) is capable of responding to predetermined inquiry information, and
wherein the data managing section (101) is adapted to transmit prior notice information informing of a data transfer in advance, as the predetermined inquiry information, to the data storage device via the communicating section (103), when the event detecting section (104) detects the power OFF event, and to transfer the data stored in the data storing section (102) to the data storage device upon receipt of a response to the prior notice information from the data storage device.

## Patentansprüche

1. Datenübertragungsvorrichtung (110, 120, 130, 140, 150, 400), die an einem Fahrzeug befestigt ist, aufweisend:
eine Kommunikationsschaltung (103), die ausgebildet ist zum Kommunizieren mit einer vorher bestimmten Datenspeichervorrichtung (200), eine Datenspeicherschaltung (102), die zum Speichern von Daten ausgebildet ist,
eine Ereigniserfassungsschaltung (104, 105), die zum Erfassen eines vorbestimmten Ereignisses ausgebildet ist, und
eine Datenverwaltungsschaltung (101), die zum Übertragen der in der Datenspeicherschaltung (102) gespeicherten Daten zu der Datenspeichervorrichtung (200) über die Kommunikationsschaltung (103), wenn die Ereigniserfassungsschaltung (104, 105) das vorbestimmte Ereignis erfasst, ausgebildet ist;
**dadurch gekennzeichnet, dass** die Datenverwaltungssthaltung ausgebildet ist zum Bestimmen, ob das Automobil in einem angehaltenen Zustand ist oder nicht, auf der Grundlage der Geschwindigkeit des Automobils, und wenn bestimmt wird, dass das Automobil nicht in einem angehaltenen Zustand ist, die Ereigniserfassungsschaltung (104, 105) ein Energieabschaltereignis als das vorbestimmte Ereignis erfasst, wodurch ein Abschalten der Betriebsenergie für die Datenübertragungsvorrichtung, zu der die Ereigniserfassungsschaltung gehört, angezeigt wird;
wobei die Datenspeicherschaltung (102) ausgebildet ist, Definitionsinformationen für geschützte Daten zu speichern, die zu schützende Daten definieren; und
wobei die Datenverwaltungsschaltung (101) ausgebildet ist zum Herausziehen eines zu übertragenden Datenelements aus Elementen der in der Datenspeicherschaltung (102) gespeicherten Daten auf der Grundlage der in der Datenspeicherschaltung (102) gespeicherten Definitionsinforniaticnen für geschützte Daten, und zum Übertragen eines herausgezogenen Datenelements zu der Datenspeichervorrichtung (200);
wobei eine Erfassungsroute der in der Datenspeicherschaltung (102) gespeicherten Daten, die anzeigt, dass die Daten von einer Informationseingabevorrichtung erfasst wurden, verwaltet wird,
wobei die in der Datenspeicherschaltung (102) gespeicherten Definitionsinformationen für geschützte Daten Korrespondenzbeziehungsinformationen enthalten, die eine Korrespondenzbeziehung zwischen der Erfassungsroute der Daten und dem Umstand, ob die Daten zu schützen sind, enthalten, und
wobei die Datenverwaltungsschaltung (101) ausgebildet ist zum Herausziehen des zu übertragenden Datenelements aus den Elementen der in der Datenspeicherschaltung (102) gespeicherten Daten auf der Grundlage der in der Datenspeicherschaltung (102) gespeicherten Korrespondenzbeziehungsinformationen und zum Übertragen eines herausgezogenen Datenelements zu der Datenspeichervorrichtung (200).

2. Datenübertragungsvorrichtung nach Anspruch 1, bei der die Datenverwaltungsschaltung (101) ausgebildet ist zum Bestimmen, ob Daten zu übertragen sind oder nicht, auf der Grundlage des Zustands der Energieversorgung und des Zustands der Geschwindigkeit des mobilen Objekts (50), und wenn bestimmt wird, dass die Geschwindigkeit null ist oder ein Energieabschalt-Anforderungsereignis erfasst wird, zum identifizieren mehrerer vorher bestimmter Datenspeichervorrichtungen (200) durch Zuweisen einer Priorität, und zum Übertragen von Daten zu einer Datenspeichervorrichtung (200), deren zugewiesene Priorität hoch ist und die als verfügbar für eine Kommunikation unter den mehreren identifizierten Datenspeichervorriehtungen bestätigt ist.

3. Datenübertragungsvorrichtung nach Anspruch 1, bei der die in der Datenspeicherschaltung (102) gespeicherten Definitionsinformationen für geschützte Daten Informationen über eine geschützte Datei enthalten, die eine zu schützende Datei bestimmen, und
bei der die Datenverwaltungsschaltung (101) ausgebildet ist zum Herausziehen der durch die Definitionsinformationen für geschützte Daten bestimmten Datei aus den Elementen der in der Datenspeicherschaltung (102) gespeicherten Daten auf der Grundlage der Informationen für eine geschützte Datei, die in den Definitionsinformationen für geschützte Daten enthalten sind, und zum Übertragen der herausgezogenen Datei zu der Datenspeichervorrichtung (200).

4. Datenübertragungsvorrichtung nach Anspruch 1, bei der die Datenverwaltungsschaltung (101) ausgebildet ist zum Löschen, nach dem Übertragen eines Elements der in der Datenspeicherschaltung (102) gespeicherten Daten zu der Datenspeichervorrichtung (200), eines Datenelements, das mit einem übertragenen Datenelement identisch ist, aus den in der Datenspeicherschaltung (102) gespeicherten Daten.

5. Datenübertragungsvorrichtung nach Anspruch 1,
bei der die Datenübertragungsvorrichtung eine Fahrzeug-Navigationsvorrichtung (400) ist und die Datenspeichervorrichtung ein mobiles Endgerät (500) mit einer Anzeigevorrichtung ist,
bei der die Datenspeichervorrichtung (200) ein der Lage ist, auf vorbestimmte Abfrageinformationen zu antworten, und
bei der die Datenverwaltungsschaltung (101) ausgebildet ist zum Übertragen von Informationen einer vorhergehenden Meldung, die vorher über eine Datenübertragung informieren, als die vorbestimmten Anfrageinformationen, zu der Datenspeichervorrichtung über die Kommunikationsschaltung (103), wenn die Ereigniserfassungsschaltung (104) das Leistungsabschaltungsereignis erfasst, und zum Übertragen der in der Datenspeicherschaltung (102) gespeicherten Daten zu der Datenspeichervorrichtung bei Empfang einer Antwort auf die Informationen einer vorhergehenden Meldung von der Datenspeichervorrichtung.

## Revendications

1. Appareil de transfert de données (110, 120, 130, 140, 150, 400), lequel est installé dans un véhicule automobile, comprenant :
une section de communication (103) qui est apte à communiquer avec un dispositif de stockage de données préalablement spécifié (200) ;
une section de stockage de données (102) qui est apte à stocker des données ;
une section de détection d'événements (104, 105) qui est apte à détecter un événement prédéterminé ; et
une section de gestion de données (101) qui est apte à transférer les données stockées dans la section de stockage de données (102) vers le dispositif de stockage de données (200), par l'intermédiaire de la section de communication (103), lorsque la section de détection d'événements (104, 105) détecte l'événement prédéterminé ;
**caractérisé en ce que** la section de gestion de données est apte à déterminer si le véhicule automobile se trouve ou non dans un état immobile, sur la base de la vitesse du véhicule automobile, et lorsqu'il est déterminé que le véhicule automobile n'est pas dans un état immobile, la section de détection d'événements (104, 105) détecte un événement de mise hors tension, en tant que l'événement prédéterminé, indiquant une coupure de puissance de fonctionnement de l'appareil de transfert de données auquel appartient la section de détection d'événements ;
dans lequel la section de stockage de données (102) est apte à stocker des informations de définition de données protégées qui définissent des données à protéger, et
dans lequel la section de gestion de données (101) est apte à extraire un élément de données à transférer, parmi des éléments des données stockées dans la section de stockage de données (102), sur la base des informations de définition de données protégées stockées dans la section de stockage de données (102), et à transférer un élément de données extrait vers le dispositif de stockage de données (200) ;
dans lequel est géré un chemin d'acquisition des données stockées dans la section de stockage de données (102), indiquant que les données ont été acquises auprès d'un dispositif de saisie d'informations ;
dans lequel les informations de définition de données protégées stockées dans la section de stockage de données (102) comportent des informations de relations de correspondance indiquant une relation de correspondance entre le chemin d'acquisition des données, et indiquant si les données doivent être protégées ; et dans lequel la section de gestion de données (101) est apte à extraire l'élément de données à transférer parmi les éléments des données stockées dans la section de stockage de données (102), sur la base des informations de relations de correspondance stockées dans la section de stockage de données (102), et à transférer un élément de données extrait vers le dispositif de stockage de données (200).

2. Appareil de transfert de données selon la revendication 1, dans lequel la section de gestion de données (101) est apte à déterminer s'il convient ou non de transférer des données, sur la base de l'état de l'alimentation électrique et de l'état de la vitesse de l'objet mobile (50), et lorsqu'il est déterminé que la vitesse est nulle ou lorsqu'un événement de demande de mise hors tension est détecté, à identifier une pluralité de dispositifs de stockage de données préalablement spécifiés (200) en leur affectant une priorité, et à transférer des données à un dispositif de stockage de données (200) dont la priorité affectée est élevée, et qui est confirmé comme étant disponible à des fins de communication parmi les dispositifs de la pluralité de dispositifs de stockage de données identifiés.

3. Appareil de transfert de données selon la revendication 1, dans lequel les informations de définition de données protégées stockées dans la section de stockage de données (102) incluent des informations de fichiers protégés qui spécifient un fichier à protéger ; et
dans lequel la section de gestion de données (101) est apte à extraire le fichier, spécifié par les informations de définition de données protégées, des éléments des données stockées dans la section de stockage de données (102), sur la base des information de fichiers protégés incluses dans les informations de définition de données protégées, et à transférer un fichier extrait vers le dispositif de stockage de données (200).

4. Appareil de transfert de données selon la revendication 1, dans lequel la section de gestion de données (101) est apte à, suite au transfert d'un élément des données stockées dans la section de stockage de données (102) vers le dispositif de stockage de données (200), supprimer un élément de données, identique à un élément de données transféré, des données stockées dans la section de stockage de données (102).

5. Appareil de transfert de données selon la revendication 1,
dans lequel l'appareil de transfert de données est un appareil de navigation pour véhicule automobile (400) et le dispositif de stockage de données est un appareil de terminal mobile (500) doté d'un écran d'affichage ;
dans lequel le dispositif de stockage de données (200) est en mesure de répondre à des informations d'interrogation prédéterminées ; et
dans lequel la section de gestion de données (101) est apte à transmettre des informations de notification préalable signalant un transfert de données à l'avance, sous la forme des informations d'interrogation prédéterminées, au dispositif de stockage de données, par l'intermédiaire de la section de communication (103), lorsque la section de détection d'événements (104) détecte l'événement de mise hors tension, et à transférer les données stockées dans la section de stockage de données (102) vers le dispositif de stockage de données, suite à la réception d'une réponse aux informations de notification préalable en provenance du dispositif de stockage de données.
